(19) **Europäisches Patentamt European Patent Office Office européen des brevets**

(11) **EP 4 592 150 A1**

(12) **EUROPEAN PATENT APPLICATION**
published in accordance with Art. 153(4) EPC

(43) Date of publication:
30.07.2025 Bulletin 2025/31

(21) Application number: 22960438.4

(22) Date of filing: 30.09.2022

(51) International Patent Classification (IPC):
*B60T 8/17* (2006.01)   *B60T 13/74* (2006.01)
*B60T 17/22* (2006.01)

(52) Cooperative Patent Classification (CPC):
B60T 8/17; B60T 13/74; B60T 17/22

(86) International application number:
PCT/CN2022/123620

(87) International publication number:
WO 2024/065830 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Shenzhen Yinwang Intelligent
Technologies Co., Ltd.
Shenzhen, Guangdong 518129 (CN)

(72) Inventors:
• JIN, Biao
  Shenzhen, Guangdong 518129 (CN)
• ZHANG, Yongsheng
  Shenzhen, Guangdong 518129 (CN)
• YANG, Weimiao
  Shenzhen, Guangdong 518129 (CN)
• LIU, Donghao
  Shenzhen, Guangdong 518129 (CN)

(74) Representative: Gill Jennings & Every LLP
The Broadgate Tower
20 Primrose Street
London EC2A 2ES (GB)

(54) **BRAKING SYSTEM AND CONTROL METHOD AND DEVICE**

(57) A braking system, and a control method and apparatus are provided. The braking system includes a first control unit and a second control unit that are located on a first axle, a third control unit located on a second axle, a first electro-mechanical brake EMB actuator, a second EMB actuator, a third EMB actuator, and a fourth EMB actuator. The first control unit is configured to control the first EMB actuator; the second control unit is configured to control the second EMB actuator; the third control unit is configured to control at least one of the third EMB actuator and the fourth EMB actuator; and the first EMB actuator, the second EMB actuator, the third EMB actuator, and the fourth EMB actuator are configured to separately or jointly complete a braking operation on a vehicle under control of at least one control unit in the braking system. The braking system includes a plurality of control units and the four EMB actuators, so that an EPB function of higher redundancy can be implemented, and a parking capability of the vehicle can be improved.

```
                    ┌─────────┐
                    │  Start  │
                    └────┬────┘
                         ↓
              ┌──────────────────────┐      601
        ┌─────│   A control          │
        │ No  │   apparatus determines│
        │     │   whether a vehicle is in a│
        │     │   static state       │
        │     └──────────┬───────────┘
        │                │ Yes
        │                ↓
        │     ┌──────────────────────┐      602
        │     │ The control apparatus determines a slope of a current location of│
        │     │ the vehicle          │
        │     └──────────┬───────────┘
        │                ↓
        │     ┌──────────────────────┐      603
        │     │ The control apparatus determines a braking strategy of the vehicle│
        │     │ based on the slope of the current location of the vehicle│
        │     └──────────┬───────────┘
        │                ↓
        │     ┌──────────────────────┐
        │     │ The control apparatus determines a target control unit and a target│
        │     │ EMB actuator in a braking system according to the braking│   604
        │     │ strategy of the vehicle and based on a fault state of each ECU and│
        │     │ a fault state of each EMB actuator in the braking system│
        │     └──────────────────────┘
```

FIG. 6

## Description

TECHNICAL FIELD

This application relates to the field of vehicle technologies, and in particular, to a braking system, and a control method and apparatus.

BACKGROUND

Electronic parking brake (electronic parking brake, EPB) is a key actuator for implementing static parking brake by a vehicle on a flat ground and a ramp. Usually, two motors are deployed on rims on a rear axle of the vehicle to implement an EPB function of the rear axle. A higher level of intelligent driving indicates a higher requirement for EPB redundancy. Currently, redundancy is controlled mainly by adding a microcontroller (microcontroller unit, MCU) or a driver integrated circuit (application specific integrated circuit, ASIC). When one of the motors on the rear axle is faulty, a vehicle parking system can only implement parking brake for one wheel. As a result, a hill hold capability of the vehicle is reduced from 30% to 15%, affecting safety of the vehicle and a driver.

SUMMARY

This application provides a braking system, and a control method and apparatus, to improve a parking capability of a vehicle.

According to a first aspect, this application provides a braking system, including a first control unit and a second control unit that are located on a first axle, a third control unit located on a second axle, a first electromechanical brake EMB actuator, a second EMB actuator, a third EMB actuator, and a fourth EMB actuator. The first control unit is configured to control the first EMB actuator; the second control unit is configured to control the second EMB actuator; the third control unit is configured to control at least one of the third EMB actuator and the fourth EMB actuator; and the first EMB actuator, the second EMB actuator, the third EMB actuator, and the fourth EMB actuator are configured to separately or jointly complete a braking operation on a vehicle under control of at least one control unit in the braking system.

The braking system provided in embodiments of this application includes four EMB actuators. The four EMB actuators may separately or jointly complete the braking operation on the vehicle under control of at least one of at least two control units, to implement an EPB function of higher redundancy. When a part of the control units in the braking system fail, another part of the control units may be used to complete redundancy control on a part of the EMB actuators. When a part of the EMB actuators fail, another part of the EMB actuators may be used to perform the braking operation. This can improve a parking capability of the vehicle.

In a possible design, the first axle is a front axle, and the second axle is a rear axle. When the vehicle is currently in a downhill road condition, and a slope of a location of the vehicle is less than a first threshold,

if none of the first control unit, the second control unit, the first EMB actuator, and the second EMB actuator is faulty, the first control unit controls the first EMB actuator, and the second control unit controls the second EMB actuator, to jointly complete the braking operation on the vehicle; or
if both the first control unit and the second control unit are faulty, and none of the third control unit, the third EMB actuator, and the fourth EMB actuator is faulty, the third control unit controls the third EMB actuator and the fourth EMB actuator to complete the braking operation on the vehicle; or
if both the first EMB actuator and the second EMB actuator are faulty, and none of the third control unit, the third EMB actuator, and the fourth EMB actuator is faulty, the third control unit controls the third EMB actuator and the fourth EMB actuator to complete the braking operation on the vehicle; or
if both the first control unit and the second EMB actuator are faulty, neither of the second control unit and the first EMB actuator is faulty, and none of the third control unit, the third EMB actuator, and the fourth EMB actuator is faulty, the third control unit controls the third EMB actuator and the fourth EMB to complete the braking operation on the vehicle; or
if both the second control unit and the first EMB actuator are faulty, neither of the first control unit and the second EMB actuator is faulty, and none of the third control unit, the third EMB actuator, and the fourth EMB actuator is faulty, the third control unit controls the third EMB actuator and the fourth EMB to complete the braking operation on the vehicle; or
if the first control unit or the first EMB actuator is faulty, neither of the second control unit and the second EMB actuator is faulty, and none of the third control unit, the third EMB actuator, and the fourth EMB actuator is faulty, the second control unit controls the second EMB actuator, and the third control unit controls at least one of the third EMB actuator and the fourth EMB actuator, to complete the braking operation on the vehicle; or
if the second control unit or the second EMB actuator is faulty, neither of the first control unit and the first EMB actuator is faulty, and none of the third control unit, the third EMB actuator, and the fourth EMB actuator is faulty, the first control unit controls the first EMB actuator, and the third control unit controls at least one of the third EMB actuator and the fourth EMB actuator, to complete the braking operation on the vehicle.

According to this design, when the vehicle is currently in the downhill road condition, a vertical load of the vehicle is mainly concentrated on the front axle, and when the vehicle is in a medium slope (for example, the first threshold is 30%), an EMB actuator on the front axle in the braking system is used to complete the braking operation. In comparison with an EMB actuator on the rear axle, the EMB actuator on the front axle requires less energy for clamping, thereby saving energy. When an ECU on the front axle or an EMB actuator on the front axle is faulty, from the perspective of energy saving and redundancy, a non-faulty EMB actuator on the front axle is preferentially selected for clamping, and at least one EMB actuator on the rear axle can be further used for clamping at the same time, which can further improve the parking capability, to improve safety of the vehicle and a driver.

In a possible design, the first axle is a rear axle, and the second axle is a front axle; and when the vehicle is currently in a downhill road condition, and a slope of a location of the vehicle is less than a first threshold,

if none of the third control unit, the third EMB actuator, and the fourth EMB actuator is faulty, the third control unit controls the third EMB actuator and the fourth EMB actuator to complete the braking operation on the vehicle; or

if the third control unit, the third EMB actuator, and the fourth EMB actuator are all faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if neither of the third control unit and the third EMB actuator is faulty, the fourth EMB actuator is faulty, and none of the first control unit, the first EMB actuator, and the second EMB actuator is faulty,

the third control unit controls the third EMB actuator, and the first control unit controls the first EMB actuator, to complete the braking operation on the vehicle; or the third control unit controls the third EMB actuator, and the second control unit controls the second EMB actuator, to complete the braking operation on the vehicle; or the third control unit controls the third EMB actuator, the first control unit controls the first EMB actuator, and the second control unit controls the second EMB actuator, to complete the braking operation on the vehicle; or

if neither of the third control unit and the fourth EMB actuator is faulty, the third EMB actuator is faulty, and none of the first control unit, the first EMB actuator, and the second EMB actuator is faulty,

the third control unit controls the fourth EMB actuator, and the first control unit controls the first EMB actuator, to complete the braking operation on the vehicle; or the third control unit controls the fourth EMB actuator, and the second control unit controls the second EMB actuator, to complete the braking operation on the vehicle; or the third control unit controls the fourth EMB actuator, the first control unit controls the first EMB actuator, and the second control unit controls the second EMB actuator, to complete the braking operation on the vehicle.

According to this design, when the vehicle is currently in the downhill road condition, a vertical load of the vehicle is mainly concentrated on the front axle, and when the vehicle is in a medium slope, an EMB actuator on the front axle in the braking system is used to complete the braking operation. In comparison with an EMB actuator on the rear axle, the EMB actuator on the front axle requires less energy for clamping, thereby saving energy. When an ECU on the front axle or an EMB actuator on the front axle is faulty, from the perspective of energy saving and redundancy, a non-faulty EMB actuator on the front axle is preferentially selected for clamping, and at least one EMB actuator on the rear axle can be further used for clamping at the same time, which can further improve the parking capability, to improve safety of the vehicle and a driver.

In a possible design, the first axle is a rear axle, and the second axle is a front axle; and when the vehicle is currently in an uphill road condition, and a slope of a location of the vehicle is less than a first threshold,

if none of the first control unit, the second control unit, the first EMB actuator, and the second EMB actuator is faulty, the first control unit controls the first EMB actuator, and the second control unit controls the second EMB actuator, to jointly complete the braking operation on the vehicle; or

if both the first control unit and the second control unit are faulty, and none of the third control unit, the third EMB actuator, and the fourth EMB actuator is faulty, the third control unit controls the third EMB actuator and the fourth EMB actuator to complete the braking operation on the vehicle; or

if both the first EMB actuator and the second EMB actuator are faulty, and none of the third control unit, the third EMB actuator, and the fourth EMB actuator is faulty, the third control unit controls the third EMB actuator and the fourth EMB actuator to complete the braking operation on the vehicle; or

if both the first control unit and the second EMB actuator are faulty, neither of the second control unit and the first EMB actuator is faulty, and none of the third control unit, the third EMB actuator, and the fourth EMB actuator is faulty, the third control unit controls the third EMB actuator and the fourth EMB to complete the braking operation on the vehicle; or

if both the second control unit and the first EMB actuator are faulty, neither of the first control unit and the second EMB actuator is faulty, and none of the third control unit, the third EMB actuator, and the fourth EMB actuator is faulty, the third control unit controls the third EMB actuator and the fourth EMB to complete the braking operation on the vehicle; or

if the first control unit is faulty, neither of the second control unit and the second EMB actuator is faulty, and none of the third control unit, the third EMB actuator, and the fourth EMB actuator is faulty, the second control unit controls the second EMB actuator, and the third control unit controls at least one of the third EMB actuator and the fourth EMB actuator, to complete the braking operation on the vehicle; or if the second control unit is faulty, neither of the first control unit and the first EMB actuator is faulty, and none of the third control unit, the third EMB actuator, and the fourth EMB actuator is faulty, the first control unit controls the first EMB actuator, and the third control unit controls at least one of the third EMB actuator and the fourth EMB actuator, to complete the braking operation on the vehicle.

According to this design, when the vehicle is currently in the uphill road condition and the vehicle is in a medium slope, a vertical load of the vehicle is mainly concentrated on the rear axle. In this case, an EMB actuator on the rear axle in the braking system is used to complete the braking operation; and in comparison with an EMB actuator on the front axle, the EMB actuator on the rear axle requires less energy for clamping, thereby saving energy. When an ECU on the rear axle or an EMB actuator on the rear axle is faulty, from the perspective of energy saving and redundancy, a non-faulty EMB actuator on the rear axle is preferentially selected for clamping, and at least one EMB actuator on the front axle can be further used for clamping at the same time, which can further improve the parking capability, to improve safety of the vehicle and a driver.

In a possible design, the first axle is a front axle, and the second axle is a rear axle; and when the vehicle is currently in an uphill road condition, and a slope of a location of the vehicle is less than a first threshold,

if none of the third control unit, the third EMB actuator, and the fourth EMB actuator is faulty, the third control unit controls the third EMB actuator and the fourth EMB actuator to complete the braking operation on the vehicle; or
if the third control unit, the third EMB actuator, and the fourth EMB actuator are all faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or
if neither of the third control unit and the third EMB actuator is faulty, the fourth EMB actuator is faulty, and none of the first control unit, the first EMB actuator, and the second EMB actuator is faulty, the third control unit controls the third EMB actuator, and the first control unit controls the first EMB actuator, to complete the braking operation on the vehicle; or the third control unit controls the third EMB actuator, and the second control unit controls the second EMB actuator, to complete the braking operation on the vehicle; or the third control unit controls the third EMB actuator, the first control unit controls the first EMB actuator, and the second control unit controls the second EMB actuator, to complete the braking operation on the vehicle; or
if neither of the third control unit and the fourth EMB actuator is faulty, the third EMB actuator is faulty, and none of the first control unit, the first EMB actuator, and the second EMB actuator is faulty, the third control unit controls the fourth EMB actuator, and the first control unit controls the first EMB actuator, to complete the braking operation on the vehicle; or the third control unit controls the fourth EMB actuator, and the second control unit controls the second EMB actuator, to complete the braking operation on the vehicle; or the third control unit controls the fourth EMB actuator, the first control unit controls the first EMB actuator, and the second control unit controls the second EMB actuator, to complete the braking operation on the vehicle.

According to this design, when the vehicle is currently in the uphill road condition and the vehicle is in a medium slope, a vertical load of the vehicle is mainly concentrated on the rear axle. In this case, an EMB actuator on the rear axle in the braking system is used to complete the braking operation; and in comparison with an EMB actuator on the front axle, the EMB actuator on the rear axle requires less energy for clamping, thereby saving energy. When an ECU on the rear axle or an EMB actuator on the rear axle is faulty, from the perspective of energy saving and redundancy, a non-faulty EMB actuator on the rear axle is preferentially selected for clamping, and at least one EMB actuator on the front axle can be further used for clamping at the same time, which can further improve the parking capability, to improve safety of the vehicle and a driver.

In a possible design, when the vehicle is currently in a downhill road condition or the vehicle is currently in the uphill road condition, and the slope of the location of the vehicle is greater than the first threshold,

if none of the first control unit, the second control unit, the third control unit, the first EMB actuator, the second EMB actuator, the third EMB actuator, and the fourth EMB actuator is faulty, the first control unit controls the first EMB actuator, the second control unit controls the second EMB actuator, and the third control unit controls the third EMB actuator and the fourth EMB actuator, to complete the braking operation on the vehicle; or
if there is a faulty control unit in the first control unit, the second control unit, and the third control unit, or there is a faulty EMB actuator in the first EMB actuator, the second EMB actuator, the third EMB actuator, and the fourth EMB actuator, a non-faulty control unit controls a non-faulty EMB actuator to complete the braking operation on the vehicle, and increases a clamping force of the non-faulty EMB actuator on a braked wheel.

According to this design, when a longitudinal slope of a current location of the vehicle is a large slope (for example, the longitudinal slope is greater than the first threshold), regardless of whether the vehicle is currently in an uphill parking road condition or a downhill parking road condition, the four EMB actuators on the front axle and the rear axle are preferentially used to simultaneously perform clamping to implement braking of the vehicle. This can improve safety. When a part of ECUs or a part of EMB actuators are faulty, from the perspective of redundancy and safety, a non-faulty ECU may be used to control another non-faulty EMB actuator to perform clamping, and increase a clamping force of the non-faulty EMB actuator, to improve the parking capability.

In a possible design, the first axle is a rear axle, and the second axle is a front axle; and when the vehicle is currently in a flat-ground road condition,

> if none of the first control unit, the second control unit, the first EMB actuator, and the second EMB actuator is faulty, the first control unit controls the first EMB actuator, and/or the second control unit controls the second EMB actuator, to complete the braking operation on the vehicle; or
> if both the first control unit and the second control unit are faulty, and none of the third control unit, the third EMB actuator, and the fourth EMB actuator is faulty, the third control unit controls at least one of the third EMB actuator and the fourth EMB actuator to complete the braking operation on the vehicle; or
> if both the first EMB actuator and the second EMB actuator are faulty, and none of the third control unit, the third EMB actuator, and the fourth EMB actuator is faulty, the third control unit controls at least one of the third EMB actuator and the fourth EMB actuator to complete the braking operation on the vehicle; or
> if both the first control unit and the second EMB actuator are faulty, and none of the third control unit, the third EMB actuator, and the fourth EMB actuator is faulty, the third control unit controls at least one of the third EMB actuator and the fourth EMB actuator to complete the braking operation on the vehicle; or
> if both the second control unit and the first EMB actuator are faulty, and none of the third control unit, the third EMB actuator, and the fourth EMB actuator is faulty, the third control unit controls at least one of the third EMB actuator and the fourth EMB actuator to complete the braking operation on the vehicle; or
> if the first control unit is faulty, and neither of the second control unit and the second EMB actuator is faulty,

the second control unit controls the second EMB actuator to complete the braking operation on the vehicle; or

when the third control unit is not faulty and there is at least one non-faulty EMB actuator in the third EMB actuator and the fourth EMB actuator, the second control unit controls the second EMB actuator, and the third control unit controls the at least one non-faulty EMB actuator in the third EMB actuator and the fourth EMB actuator, to complete the braking operation on the vehicle; or

if the second control unit is faulty, and neither of the first control unit and the first EMB actuator is faulty, the first control unit controls the first EMB actuator to complete the braking operation on the vehicle; or

when the third control unit is not faulty and there is at least one non-faulty EMB actuator in the third EMB actuator and the fourth EMB actuator, the first control unit controls the first EMB actuator, and the third control unit controls the at least one non-faulty EMB actuator in the third EMB actuator and the fourth EMB actuator, to complete the braking operation on the vehicle.

According to this design, because a power of an EMB actuator on the rear axle is less than a power of an EMB actuator on the front axle, when the vehicle is currently in a flat-ground parking road condition, the EMB actuator on the rear axle is preferentially used for clamping, so that an energy saving effect can be further implemented.

In a possible design, the first axle is a front axle, and the second axle is a rear axle; and when the vehicle is currently in a flat-ground road condition,

> if none of the third control unit, the third EMB actuator, and the fourth EMB actuator is faulty, the third control unit controls at least one of the third EMB actuator and the fourth EMB actuator to complete the braking operation on the vehicle; or
> if the third control unit, the third EMB actuator, and the fourth EMB actuator are all faulty, and none of the first control unit, the second control unit, the first EMB actuator, and the second EMB actuator is faulty, the first control unit controls the first EMB actuator, and/or the second control unit controls the second EMB actuator, to complete the braking operation on the vehicle; or
> if neither of the third control unit and the third EMB actuator is faulty, and the fourth EMB actuator is faulty,
> the third control unit controls the third EMB actuator to complete the braking operation on the vehicle; or
> the third control unit controls the third EMB actuator, and the first control unit controls the first EMB actuator when neither of the first control unit and the first EMB actuator is faulty, and/or the second control unit controls the second EMB actuator when neither of the second control unit and the second EMB actuator is faulty, to complete the braking operation on the vehicle; or

if neither of the third control unit and the fourth EMB actuator is faulty, and the third EMB actuator is faulty, the third control unit controls the fourth EMB actuator to complete the braking operation on the vehicle; or the first control unit controls the first EMB actuator when neither of the first control unit and the first EMB actuator is faulty, and/or the second control unit controls the second EMB actuator when neither of the second control unit and the second EMB actuator is faulty, to complete the braking operation on the vehicle.

According to this design, because a power of an EMB actuator on the rear axle is less than a power of an EMB actuator on the front axle, when the vehicle is currently in a flat-ground parking road condition, the EMB actuator on the rear axle is preferentially used for clamping, so that an energy saving effect can be further implemented.

In a possible design, the braking system further includes a fourth control unit located on the second axle. The third control unit is configured to control the third EMB actuator; and the fourth control unit is configured to control the fourth EMB actuator. According to this design, redundancy of a control unit in the braking system can be further improved.

In a possible design, the first axle is a front axle, and the second axle is a rear axle; and when the vehicle is currently in a downhill road condition, and a slope of a location of the vehicle is less than a first threshold,

if none of the first control unit, the second control unit, the first EMB actuator, and the second EMB actuator is faulty, the first control unit controls the first EMB actuator, and the second control unit controls the second EMB actuator, to jointly complete the braking operation on the vehicle; or

if both the first control unit and the second control unit are faulty, and none of the third control unit, the fourth control unit, the third EMB actuator, and the fourth EMB actuator is faulty, the third control unit controls the third EMB actuator, and the fourth control unit controls the fourth EMB actuator, to complete the braking operation on the vehicle; or

if both the first EMB actuator and the second EMB actuator are faulty, and none of the third control unit, the fourth control unit, the third EMB actuator, and the fourth EMB actuator is faulty, the third control unit controls the third EMB actuator, and the fourth control unit controls the fourth EMB actuator, to complete the braking operation on the vehicle; or

if both the first control unit and the second EMB actuator are faulty, neither of the second control unit and the first EMB actuator is faulty, and none of the third control unit, the fourth control unit, the third EMB actuator, and the fourth EMB actuator is faulty, the third control unit controls the third EMB actuator, and the fourth control unit controls the fourth EMB, to complete the braking operation on the vehicle; or

if both the second control unit and the first EMB actuator are faulty, neither of the first control unit and the second EMB actuator is faulty, and none of the third control unit, the fourth control unit, the third EMB actuator, and the fourth EMB actuator is faulty, the third control unit controls the third EMB actuator, and the fourth control unit controls the fourth EMB, to complete the braking operation on the vehicle; or

if the first control unit is faulty, neither of the second control unit and the second EMB actuator is faulty, and none of the third control unit, the third EMB actuator, and the fourth EMB actuator is faulty, the second control unit controls the second EMB actuator, the third control unit controls the third EMB actuator, and the fourth control unit controls at least one of the fourth EMB actuator, to complete the braking operation on the vehicle; or

if the second control unit is faulty, neither of the first control unit and the first EMB actuator is faulty, and none of the third control unit, the fourth control unit, the third EMB actuator, and the fourth EMB actuator is faulty, the first control unit controls the first EMB actuator, the third control unit controls the third EMB actuator, and the fourth control unit controls at least one of the fourth EMB actuator, to complete the braking operation on the vehicle.

According to this design, when the vehicle is currently in the downhill road condition, a vertical load of the vehicle is mainly concentrated on the front axle, and when the vehicle is in a medium slope, an EMB actuator on the front axle in the braking system is used to complete the braking operation. In comparison with an EMB actuator on the rear axle, the EMB actuator on the front axle requires less energy for clamping, thereby saving energy. When an ECU on the front axle or an EMB actuator on the front axle is faulty, from the perspective of energy saving and redundancy, a non-faulty EMB actuator on the front axle is preferentially selected for clamping, and at least one EMB actuator on the rear axle can be further used for clamping at the same time, which can further improve the parking capability, to improve safety of the vehicle and a driver.

In a possible design, the first axle is a front axle, and the second axle is a rear axle; and when the vehicle is currently in an uphill road condition, and a slope of a location of the vehicle is less than a first threshold,

if none of the third control unit, the fourth control unit, the third EMB actuator, and the fourth EMB actuator is faulty, the third control unit controls the third EMB actuator, and the fourth control unit controls the fourth EMB actuator, to jointly complete the braking operation on the vehicle; or

if both the third control unit and the fourth control unit are faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if both the third EMB actuator and the fourth EMB actuator are faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if both the third control unit and the fourth EMB actuator are faulty, neither of the fourth control unit and the third EMB actuator is faulty, and none of the first control unit, the second control unit, the first EMB actuator, and the second EMB actuator is faulty, the first control unit controls the first EMB actuator, and the second control unit controls the second EMB, to complete the braking operation on the vehicle; or

if both the fourth control unit and the third EMB actuator are faulty, neither of the third control unit and the fourth EMB actuator is faulty, and none of the first control unit, the second control unit, the first EMB actuator, and the second EMB actuator is faulty, the first control unit controls the first EMB actuator, and the second control unit controls the second EMB, to complete the braking operation on the vehicle; or

if the third control unit is faulty, neither of the fourth control unit and the fourth EMB actuator is faulty, and none of the first control unit, the first EMB actuator, and the second EMB actuator is faulty, the fourth control unit controls the fourth EMB actuator, the first control unit controls the first EMB actuator, and the second control unit controls at least one of the second EMB actuator, to complete the braking operation on the vehicle; or

if the fourth control unit is faulty, neither of the third control unit and the third EMB actuator is faulty, and none of the first control unit, the second control unit, the first EMB actuator, and the second EMB actuator is faulty, the third control unit controls the third EMB actuator, the first control unit controls the first EMB actuator, and the second control unit controls at least one of the second EMB actuator, to complete the braking operation on the vehicle.

According to this design, when the vehicle is currently in the uphill road condition and the vehicle is in a medium slope, a vertical load of the vehicle is mainly concentrated on the rear axle. In this case, an EMB actuator on the rear axle in the braking system is used to complete the braking operation; and in comparison with an EMB actuator on the front axle, the EMB actuator on the rear axle requires less energy for clamping, thereby saving energy. When an ECU on the rear axle or an EMB actuator on the rear axle is faulty, from the perspective of energy saving and redundancy, a non-faulty EMB actuator on the rear axle is preferentially selected for clamping, and at least one EMB actuator on the front axle can be further used for clamping at the same time, which can further improve the parking capability, to improve safety of the vehicle and a driver.

In a possible design, when the vehicle is currently in a downhill road condition or the vehicle is currently in an uphill road condition, and a slope of a location of the vehicle is greater than a first threshold,

if none of the first control unit, the second control unit, the third control unit, the fourth control unit, the first EMB actuator, the second EMB actuator, the third EMB actuator, and the fourth EMB actuator is faulty, the first control unit controls the first EMB actuator, the second control unit controls the second EMB actuator, the third control unit controls the third EMB actuator, and the fourth control unit controls the fourth EMB actuator, to complete the braking operation on the vehicle; or

if there is a faulty control unit in the first control unit, the second control unit, the third control unit, and the fourth control unit, or there is a faulty EMB actuator in the first EMB actuator, the second EMB actuator, the third EMB actuator, and the fourth EMB actuator, a non-faulty control unit controls a non-faulty EMB actuator to complete the braking operation on the vehicle, and increases a clamping force of the non-faulty EMB actuator on a braked wheel.

According to this design, when a longitudinal slope of a current location of the vehicle is a large slope (for example, the longitudinal slope is greater than the first threshold), regardless of whether the vehicle is currently in an uphill parking road condition or a downhill parking road condition, the four EMB actuators on the front axle and the rear axle are preferentially used to simultaneously perform clamping to implement braking of the vehicle. This can improve safety. When a part of ECUs or a part of EMB actuators are faulty, from the perspective of redundancy and safety, a non-faulty ECU may be used to control another non-faulty EMB actuator to perform clamping, and increase a clamping force of the non-faulty EMB actuator, to improve the parking capability.

In a possible design, when the vehicle is currently in a flat-ground road condition,

if none of the third control unit, the fourth control unit, the third EMB actuator, and the fourth EMB actuator is faulty, the third control unit controls the third EMB actuator, and/or the fourth control unit controls the fourth EMB actuator, to complete the braking operation on the vehicle; or

if the third control unit or the third EMB actuator is faulty, and neither of the fourth control unit and the fourth EMB actuator is faulty, the fourth control unit controls the fourth EMB actuator to complete the braking operation on the vehicle; or

if the fourth control unit or the fourth EMB actuator is faulty, and neither of the third control unit and the third EMB actuator is faulty, the fourth control unit controls the fourth EMB actuator to complete the braking operation on the vehicle; or

if both the third control unit and the fourth control unit are faulty, and neither of the first control unit and the first EMB actuator is faulty, the first control unit controls the first EMB actuator; or

if both the third control unit and the fourth control unit are faulty, and none of the first control unit, the second control unit, the first EMB actuator, and the second EMB actuator is faulty, the first control unit controls the first EMB actuator, and the second control unit controls the second EMB actuator.

According to this design, because a power of an EMB actuator on the rear axle is less than a power of an EMB actuator on the front axle, when the vehicle is currently in a flat-ground parking road condition, the EMB actuator on the rear axle is preferentially used for clamping, so that an energy saving effect can be further implemented.

In a possible design, the slope is a longitudinal slope.

According to a second aspect, this application provides a control method for a braking system. The method includes: determining a target control unit and a target EMB actuator in the braking system based on a slope of a current location of a vehicle; and controlling, by using the target control unit, the target EMB actuator to complete a braking operation on the vehicle. According to the method, the target control unit and the target EMB actuator can be determined based on the slope, so that optimal braking control can be implemented, and a parking capability can be improved especially in a case of a large slope.

In a possible design, the determining a target control unit and a target EMB actuator in the braking system based on a slope of a current location of a vehicle includes: determining a braking strategy of the vehicle based on the slope of the current location of the vehicle; and determining the target control unit and the target EMB actuator in the braking system according to the braking strategy of the vehicle. According to the design, an optimal control solution can be determined by considering the slope of the location of the vehicle during determining of the braking strategy of the vehicle.

In a possible design, the determining the target control unit and the target EMB actuator in the braking system according to the braking strategy of the vehicle includes: determining the target control unit and the target EMB actuator in the braking system according to the braking strategy of the vehicle and based on a fault state of each ECU and a fault state of each EMB actuator in the braking system. According to the design, the optimal control solution can be determined by combining the braking strategy, the fault state of each ECU, and the fault state of each EMB actuator.

Implementation 1: The braking strategy includes: when the vehicle is currently in a downhill road condition, preferentially selecting a first EMB actuator and a second EMB actuator that are located on a front axle, to perform the braking operation. Compared with an EMB actuator on a rear axle, an EMB actuator on the front axle requires less energy for clamping, thereby saving energy.

In a possible design, the braking system includes a first control unit located on the front axle, a third control unit and/or a fourth control unit located on a rear axle, a first EMB actuator and a second EMB actuator that are located on the front axle, and a third EMB actuator and a fourth EMB actuator that are located on the rear axle; and

the determining the target control unit and the target EMB actuator in the braking system according to the braking strategy of the vehicle and based on a fault state of each ECU and a fault state of each EMB actuator in the braking system includes:

if none of the first control unit, the first EMB actuator, and the second EMB actuator is faulty, determining the first control unit as the target control unit, and determining the first EMB actuator and the second EMB actuator as the target EMB actuator;

if the first control unit is faulty, or both the first EMB actuator and the second EMB actuator are faulty, determining the third control unit and/or the fourth control unit as the target control unit, and determining the third EMB actuator and the fourth EMB actuator as the target EMB actuator; or

if the first control unit is not faulty, and any front-axle EMB actuator in the first EMB actuator and the second EMB actuator is faulty, determining the first control unit, and the third control unit and/or the fourth control unit as the target control unit, and determining a non-faulty front-axle EMB actuator and at least one of the third EMB actuator and the fourth EMB actuator as the target EMB actuator.

According to this design, when the vehicle is currently in the downhill road condition, a vertical load of the vehicle is mainly concentrated on the front axle, and when the vehicle is in a medium slope, it is preferable in the braking system that an ECU on the front axle is determined as the target control unit and an EMB actuator on the front axle is determined as the target EMB actuator to complete the braking operation, which can save more energy. When the EMB actuator or the ECU on the front axle is faulty, an ECU on the rear axle is added as the target control unit, and an EMB actuator on the rear axle is determined as the target EMB actuator, so that a parking capability during a single-point failure can be improved.

In a possible design, the braking system includes a first control unit and a second control unit that are located on the front axle, a third control unit and/or a fourth control unit located on a rear axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system includes:

> if none of the first control unit, the second control unit, the first EMB actuator, and the second EMB actuator is faulty, determining the first control unit and the second control unit as the target control unit, and determining the first EMB actuator and the second EMB actuator as the target EMB actuator; or
> if both the first control unit and the second control unit are faulty, or both the first EMB actuator and the second EMB actuator are faulty, or the first EMB actuator is not faulty, the first control unit configured to control the first EMB actuator is faulty, the second EMB actuator is faulty, and the second control unit configured to control the second EMB actuator is not faulty, or the first EMB actuator is faulty, the first control unit configured to control the first EMB actuator is not faulty, the second EMB actuator is not faulty, and the second control unit configured to control the second EMB actuator is faulty, determining the third control unit and/or the fourth control unit as the target control unit, and determining the third EMB actuator and the fourth EMB actuator as the target EMB actuator; or
> if there is one non-faulty control unit in the faulty first control unit and the second control unit, and an EMB actuator controlled by the non-faulty control unit is not faulty, determining the non-faulty control unit in the first control unit and the second control unit as the target control unit, and determining at least one of the third EMB actuator and the fourth EMB actuator and the EMB actuator controlled by the non-faulty control unit as the target EMB actuator.

According to this design, when the vehicle is currently in the downhill road condition, a vertical load of the vehicle is mainly concentrated on the front axle, and when the vehicle is in a medium slope, it is preferable in the braking system that an ECU on the front axle is determined as the target control unit and an EMB actuator on the front axle is determined as the target EMB actuator to complete the braking operation, which can save more energy. When the EMB actuator or the ECU on the front axle is faulty, an ECU on the rear axle is added as the target control unit, and an EMB actuator on the rear axle is determined as the target EMB actuator. Compared with a braking system in which the front axle includes one ECU, this design can improve redundancy of a control unit, and can further improve a parking capability during a single-point failure.

In a possible design, the braking strategy further includes: when the slope of the location of the vehicle is greater than a first threshold, further selecting a third EMB actuator and a fourth EMB actuator that are located on a rear axle, to jointly perform the braking operation. According to the design, in a large slope, more EMB actuators are selected to perform the braking operation, which can provide a parking capacity of the vehicle in the large slope.

In a possible design, the braking strategy includes: when the vehicle is currently in an uphill road condition, preferentially selecting a third EMB actuator and a fourth EMB actuator that are located on a rear axle, to perform the braking operation. In the uphill road condition, compared with an EMB actuator on a front axle, an EMB actuator on the rear axle requires less energy for clamping, which can save more energy.

In a possible design, the braking system includes a third control unit located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system includes:

> if none of the third control unit, the third EMB actuator, and the fourth EMB actuator is faulty, determining the third control unit as the target control unit, and determining the third EMB actuator and the fourth EMB actuator as the target EMB actuator; or
> if the third control unit is faulty, or both the third EMB actuator and the fourth EMB actuator are faulty, determining the first control unit and/or the second control unit as the target control unit, and determining the first EMB actuator and the second EMB actuator as the target EMB actuator; or
> if the third control unit is not faulty, and any rear-axle EMB actuator in the third EMB actuator and the fourth EMB actuator is faulty, determining the third control unit, and the first control unit and/or the second control unit as the target control unit, and determining a non-faulty rear-axle EMB actuator and at least one of the first EMB actuator and the second EMB actuator as the target EMB actuator.

According to this design, when the vehicle is currently in the uphill road condition, a vertical load of the vehicle is mainly concentrated on the rear axle, and when the vehicle is in a medium slope, it is preferable in the braking system that an ECU on the rear axle is determined as the target control unit and an EMB actuator on the rear axle is determined as the target EMB actuator to complete the braking operation, which can save more energy. When the EMB actuator or the ECU on the rear axle is faulty, an ECU on the front axle is added as the target control unit, and an EMB actuator on the rear axle is determined as the target EMB actuator, so that a parking capability during a single-point failure can be improved.

In a possible design, the braking system includes a third control unit and a fourth control unit that are located on the rear axle, a first control unit and/or a second control unit located on a front axle, a first EMB actuator and a second EMB actuator that are located on the front axle, and a third EMB actuator and a fourth EMB actuator that are located on the rear axle; and

the determining the target control unit and the target EMB actuator in the braking system according to the braking strategy of the vehicle and based on a fault state of each control unit and a fault state of each EMB actuator in the braking system includes:

if none of the third control unit, the fourth control unit, the third EMB actuator, and the fourth EMB actuator is faulty, determining the third control unit and the fourth control unit as the target control unit, and determining the third EMB actuator and the fourth EMB actuator as the target EMB actuator; or

if both the third control unit and the fourth control unit are faulty, or both the third EMB actuator and the fourth EMB actuator are faulty, or the third EMB actuator is not faulty, the third control unit configured to control the third EMB actuator is faulty, the fourth EMB actuator is faulty, and the fourth control unit configured to control the fourth EMB actuator is not faulty, or the third EMB actuator is faulty, the third control unit configured to control the third EMB actuator is not faulty, the fourth EMB actuator is not faulty, and the fourth control unit configured to control the fourth EMB actuator is faulty, determining the first control unit and/or the second control unit as the target control unit, and determining the first EMB actuator and the second EMB actuator as the target EMB actuator; or

if there is one non-faulty control unit in the faulty third control unit and the fourth control unit, and a rear-axle EMB actuator controlled by the non-faulty control unit is not faulty, determining the non-faulty control unit in the third control unit and the fourth control unit as the target control unit, and determining at least one of the first EMB actuator and the second EMB actuator and the rear-axle EMB actuator controlled by the non-faulty control unit as the target EMB actuator.

According to this design, when the vehicle is currently in the uphill road condition, a vertical load of the vehicle is mainly concentrated on the rear axle, and when the vehicle is in a medium slope, it is preferable in the braking system that an ECU on the rear axle is determined as the target control unit and an EMB actuator on the rear axle is determined as the target EMB actuator to complete the braking operation, which can save more energy. When the EMB actuator or the ECU on the rear axle is faulty, an ECU on the front axle is added as the target control unit, and an EMB actuator on the front axle is determined as the target EMB actuator. Compared with a braking system in which the rear axle includes one ECU, this design can improve redundancy of a control unit, and can further improve a parking capability during a single-point failure.

In a possible design, the braking strategy further includes: when the slope of the location of the vehicle is greater than a first threshold, further selecting a first EMB actuator and a second EMB actuator that are located on a front axle, to jointly perform the braking operation. According to the design, in a large slope, more EMB actuators are selected to perform the braking operation, which can improve a parking capacity of the vehicle in the large slope.

In a possible design, the braking system includes at least one front-axle control unit located on the front axle, at least one rear-axle control unit located on the rear axle, the first EMB actuator and the second EMB actuator that are located on the front axle, and the third EMB actuator and the fourth EMB actuator that are located on the rear axle, the at least one front-axle control unit includes a first control unit and/or a second control unit, and the at least one rear-axle control unit includes a third control unit and/or a fourth control unit; and

the determining the target control unit and the target EMB actuator in the braking system according to the braking strategy of the vehicle and based on a fault state of each control unit and a fault state of each EMB actuator in the braking system includes:

if none of the at least one front-axle control unit, the at least one rear-axle control unit, the first EMB actuator, the second EMB actuator, the third EMB actuator, and the fourth EMB actuator is faulty, determining the at least one front-axle control unit and the at least one rear-axle control unit as the target control unit, and determining the first EMB actuator, the second EMB actuator, the third EMB actuator, and the fourth EMB actuator as the target EMB actuator; or

if any control unit in the at least one front-axle control unit and the at least one rear-axle control unit is faulty, and none of the first EMB actuator, the second EMB actuator, the third EMB actuator, and the fourth EMB actuator is faulty, determining a non-faulty control unit in the at least one front-axle control unit and the at least one rear-axle control unit as the target control unit, and determining an EMB actuator controlled by the non-faulty control unit as the target EMB actuator; or

if neither of the at least one front-axle control unit and the at least one rear-axle control unit is faulty, and at least one EMB actuator in the first EMB actuator, the second EMB actuator, the third EMB actuator, and the fourth EMB actuator is faulty, determining a non-faulty EMB actuator as the target EMB actuator, and determining a control unit configured to control the non-faulty EMB actuator as the target EMB actuator.

According to this design, when a longitudinal slope of a current location of the vehicle is a large slope (for example, the longitudinal slope is greater than the first threshold), regardless of whether the vehicle is currently in an uphill parking road condition or a downhill parking road condition, the four EMB actuators on the front axle and the rear axle are preferentially used as the target actuator, and all the ECUs are used as the target ECU. This can improve a parking capability of the vehicle in a large slope, and can improve safety. When a part of ECUs or a part of EMB actuators are faulty, from the perspective of redundancy and safety, a non-faulty ECU may be used to control another non-faulty EMB actuator to perform clamping, and increase a clamping force of the non-faulty EMB actuator, to improve the parking capability.

In a possible design, the braking strategy includes: when the vehicle is currently in a flat-ground road condition, preferentially selecting at least one of a third EMB actuator and a fourth EMB actuator that are located on a rear axle, to perform the braking operation. Because a power of an EMB actuator on the rear axle is less than a power of an EMB actuator on the front axle, when the vehicle is currently in a flat-ground parking road condition, the EMB actuator on the rear axle is preferentially used for clamping, so that an energy saving effect can be further implemented.

In a possible design, the braking system includes a third control unit located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system includes:

if none of the third control unit, the third EMB actuator, and the fourth EMB actuator is faulty, determining the third control unit as the target control unit, and determining at least one of the third EMB actuator and the fourth EMB actuator as the target EMB actuator;
if the third control unit is faulty, or both the third EMB actuator and the fourth EMB actuator are faulty, determining the first control unit and/or the second control unit as the target control unit, and determining at least one of the first EMB actuator and the second EMB actuator as the target EMB actuator; or
if the third control unit is not faulty, and any rear-axle EMB actuator in the third EMB actuator and the fourth EMB actuator is faulty, determining the third control unit, and the first control unit and/or the second control unit as the target control unit, and determining at least one of the first EMB actuator and the second EMB actuator and a non-faulty EMB actuator in the third EMB actuator and the fourth EMB actuator as the target EMB actuator.

According to this design, because a power of an EMB actuator on the rear axle is less than a power of an EMB actuator on the front axle, when the vehicle is currently in a flat-ground parking road condition, the EMB actuator on the rear axle is preferentially used as the target EMB actuator, and the ECU on the rear axle is preferentially used as the target ECU, so that an energy saving effect can be further implemented.

In a possible design, the braking system includes a third control unit and a fourth control unit that are located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system includes:

if none of the third control unit, the fourth control unit, the third EMB actuator, and the fourth EMB actuator is faulty, determining at least one of the third control unit and the fourth control unit as the target control unit, and determining at least one of the third EMB actuator and the fourth EMB actuator as the target EMB actuator; or
if both the third control unit and the fourth control unit are faulty, or both the third EMB actuator and the fourth EMB actuator are faulty, or the third EMB actuator is not faulty, the third control unit configured to control the third EMB actuator is faulty, the fourth EMB actuator is faulty, and the fourth control unit configured to control the fourth EMB actuator is not faulty, or the third EMB actuator is faulty, the third control unit configured to control the third EMB actuator is not faulty, the fourth EMB actuator is not faulty, and the fourth control unit configured to control the fourth EMB actuator is faulty, determining at least one of the first EMB actuator and the second EMB actuator as the target EMB actuator, and determining a control unit configured to control at least one of the first EMB actuator and the second EMB actuator as the target control unit; or
if there is one non-faulty control unit in the faulty third control unit and the fourth control unit, and a rear-axle EMB actuator controlled by the non-faulty control unit is not faulty, determining the non-faulty control unit in the third control unit and the fourth control unit as the target control unit, and determining the rear-axle EMB actuator controlled by the non-faulty control unit as the target EMB actuator; or determining the non-faulty control unit in the third control unit and the fourth control unit, and the first control unit and/or the second control unit as the target control unit, and determining at least one of the first EMB actuator and the second EMB actuator and the rear-axle EMB actuator controlled by the non-faulty control unit as the target EMB actuator.

According to this design, because a power of an EMB actuator on the rear axle is less than a power of an EMB actuator on the front axle, when the vehicle is currently in a flat-ground parking road condition, the EMB actuator on the rear axle is preferentially used as the target EMB actuator, and the ECU on the rear axle is preferentially used as the target ECU, so that an energy saving effect can be further implemented. In addition, compared with a braking system in which the rear axle includes one ECU, this design can improve redundancy of a control unit, and can further improve a parking capability during a single-point failure.

In a possible design, before the determining a target control unit and a target EMB actuator in the braking system based on a slope of a current location of a vehicle, the method further includes: determining that a running status of the vehicle is a static state. When the vehicle is in the static state, there is a parking requirement. Therefore, after it is determined that the running status of the vehicle is the static state, the target control unit and the target EMB actuator in the braking system are determined. This can prevent incorrect braking operation execution.

In a possible design, before the determining a target control unit and a target EMB actuator in the braking system based on a slope of a current location of a vehicle, the method further includes: receiving a parking signal.

In a possible design, the receiving a parking signal may be implemented in the following manner: receiving the parking signal from a parking control button; or receiving the parking signal from a brake pedal; or receiving the parking signal from a park gear; or receiving the parking signal from an automated driving system or an assisted driving system.

In a possible design, the slope is a longitudinal slope.

According to a third aspect, this application provides a control apparatus, including a processor, where the processor is coupled to a memory, the memory stores program instructions, and the processor is configured to execute the program instructions, to implement the method according to the second aspect and any design of the second aspect.

According to a fourth aspect, this application provides a computer-readable storage medium, where the computer-readable storage medium stores instructions, and when the instructions are run on a computer, the computer is enabled to implement the method according to the second aspect and any design of the second aspect.

According to a fifth aspect, this application provides a computer program, including instructions. When the instructions are run on a computer, the computer is enabled to implement the method according to the second aspect and any design of the second aspect.

According to a sixth aspect, this application provides a vehicle, including wheels and the braking system according to the first aspect and any design of the first aspect.

BRIEF DESCRIPTION OF DRAWINGS

FIG. 1 is a diagram of a structure of a braking system including two ECUs according to an embodiment of this application;

FIG. 2 is a diagram of a structure of a braking system including three ECUs according to an embodiment of this application;

FIG. 3 is a diagram of a structure of another braking system including three ECUs according to an embodiment of this application;

FIG. 4 is a diagram of a structure of a braking system including four ECUs according to an embodiment of this application;

FIG. 5 is a diagram of a control method for a braking system according to an embodiment of this application;

FIG. 6 is a diagram of a method for determining a target EMB actuator according to an embodiment of this application;

FIG. 7 shows an example of an uphill scenario of a vehicle according to an embodiment of this application;

FIG. 8A and FIG. 8B are a diagram of another control method for a braking system according to an embodiment of this application;

FIG. 9 is a diagram of a control method for a medium slope scenario according to an embodiment of this application;

FIG. 10 is a diagram of a control method for a large slope scenario according to an embodiment of this application;

FIG. 11 is a diagram of a control method for a small slope scenario according to an embodiment of this application; and

FIG. 12 is a diagram of a structure of a control apparatus according to an embodiment of this application.

DESCRIPTION OF EMBODIMENTS

It should be noted that the terms "system" and "network" in embodiments of this application may be used interchangeably. "A plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. "One or more of the following items (pieces)" or a similar expression thereof means any combination of these items, including a single item (piece) or any combination of a plurality of items (pieces). For example, one or more of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit priorities or importance degrees of the plurality of objects. For example, a first electronic control unit and a second electronic control unit are merely used to distinguish different electronic control units, but do not indicate different priorities or importance degrees of these electronic control units.

The following describes specific implementations of a braking system and an apparatus in this application with reference to specific embodiments. It is clear that the described embodiments are merely a part rather than all of embodiments of this application.

Embodiments of this application provide a braking system. The braking system may be used in a terminal device having a braking capability. The terminal device may be an intelligent transportation device, including but not limited to a vehicle, a ship, an aircraft, an unmanned aerial vehicle, a train, a truck, a lorry, or the like. In a specific application scenario, the braking system may be used in the internet of vehicles, for example, vehicle to everything (vehicle to everything, V2X), a long term evolution-vehicle (long term evolution-vehicle, LTE-V), or a vehicle to vehicle (vehicle to vehicle, V2V), and is particularly applicable to an automated vehicle or an assisted driving vehicle.

The following describes specific implementations of the braking system provided in embodiments of this application.

The braking system provided in embodiments of this application may include at least two control units and four electro-mechanical brake (electro-mechanical brake, EMB) actuators. Each control unit is connected to at least one EMB actuator. Each of the at least two control units is configured to control the at least one EMB actuator connected to the control unit, to complete a braking operation on a wheel connected to the at least one EMB actuator.

The four EMB actuators include a front left EMB actuator for braking a front left wheel of a vehicle, a front right EMB actuator for braking a front right wheel of the vehicle, a rear left EMB actuator for braking a rear left wheel of the vehicle, and a rear right EMB actuator for braking a rear right wheel of the vehicle. For example, the EMB actuator may be any device that can implement an execution function in the braking system, for example, may include but is not limited to a motor.

In embodiments of this application, the control unit includes but is not limited to an electronic control unit (electronic control unit, ECU), a microcontroller unit (microcontroller unit, MCU), a vehicle dynamics control (vehicle dynamics control, VDC) system, and a vehicle identification unit (Vehicle Identification Unit, VIU). In the following embodiments, an example in which the control unit is an ECU is used for description.

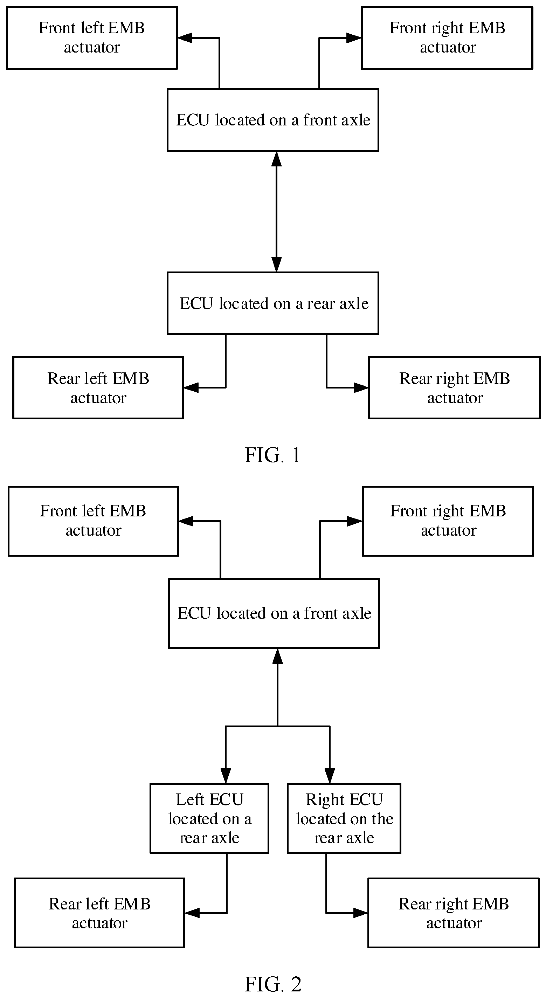

With reference to FIG. 1 to FIG. 4, the following uses an example in which the control unit is an ECU to describe specific implementations of the braking system that includes different quantities of control units.

For example, the braking system includes two ECUs. As shown in FIG. 1, the braking system includes an ECU located on a front axle and an ECU located on a rear axle. The ECU located on the front axle is configured to control a front left EMB actuator and a front right EMB actuator, and the ECU located on the rear axle is configured to control a rear left EMB actuator and a rear right EMB actuator.

For example, the braking system includes three ECUs. As shown in FIG. 2, the three ECUs included in the braking system are one ECU located on a front axle and two ECUs located on a rear axle. The ECU located on the front axle is configured to control a front left EMB actuator and a front right EMB actuator, a left ECU located on the rear axle is configured to control a rear left EMB actuator, and a right ECU located on the rear axle is configured to control a rear right EMB actuator.

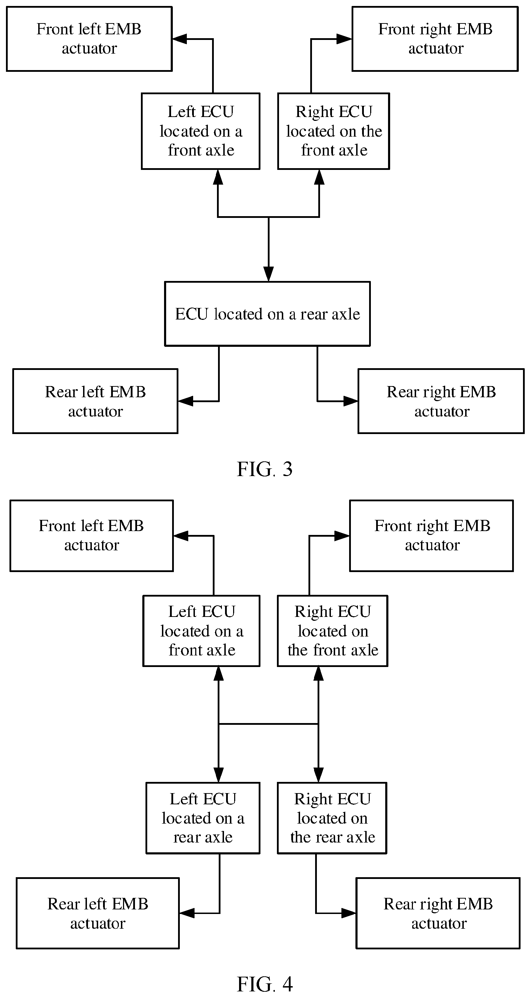

For example, the braking system includes three ECUs. As shown in FIG. 3, the three ECUs included in the braking system are two ECUs located on a front axle and one ECU located on a rear axle. A left ECU located on the front axle is configured to control a front left EMB actuator, a right ECU located on the front axle is configured to control a front right EMB actuator, and the ECU located on the rear axle is configured to control a rear left EMB actuator and a rear right EMB actuator.

For example, the braking system includes four ECUs. As shown in FIG. 4, the four ECUs included in the braking system are two ECUs located on a front axle and two ECUs located on a rear axle. A left ECU located on the front axle is configured to control a front left EMB actuator, a right ECU located on the front axle is configured to control a front right EMB actuator, a left ECU located on the rear axle is configured to control a rear left EMB actuator, and a right ECU located on the rear axle is configured to control a rear right EMB actuator.

According to the braking system provided in embodiments of this application, four rims of the vehicle are integrated with respective EMB actuators, and the four EMB actuators may separately or jointly complete the braking operation on the vehicle under control of at least one of the at least two control units, to implement an EPB function of higher redundancy. When a part of the control units fail, another part of the control units may be used to complete redundancy control on a part of the EMB actuators. When a part of the EMB actuators fail, another part of the EMB actuators may be used to perform the braking operation. This can improve a parking capability of the vehicle.

In a possible implementation, when the vehicle is currently in a downhill road condition, and a slope of a location of the vehicle is less than a first threshold, an EMB actuator on the front axle in the braking system is preferentially used to complete the braking operation. If an EMB actuator or an ECU on the front axle is faulty, a non-faulty ECU on the front axle may be used to control a non-faulty EMB actuator to complete the braking operation on the vehicle in combination with at least one non-faulty EMB actuator on the rear axle.

An example in which the braking system includes three ECUs and four EMB actuators is used. Refer to the braking system shown in FIG. 3. The three ECUs include the left ECU located on the front axle, the right ECU located on the front axle, and the ECU located on the rear axle. When the vehicle is currently in the downhill road condition, and the slope of the location of the vehicle is less than the first threshold, the braking system may be implemented in any one of the following possible implementations (1) to (7).

(1) If none of the left ECU located on the front axle, the right ECU located on the front axle, the front left EMB actuator, and the front right EMB actuator is faulty, the left ECU located on the front axle controls the front left EMB actuator, and the right ECU located on the front axle controls the front right EMB actuator, to jointly complete the braking operation on the vehicle.

(2) If both the left ECU located on the front axle and the right ECU located on the front axle are faulty, and none of the ECU located on the rear axle, the rear left EMB actuator, and the rear right EMB actuator is faulty, the ECU located on the rear axle controls the rear left EMB actuator and the rear right EMB actuator to complete the braking operation on the vehicle.

(3) If both the front left EMB actuator and the front right EMB actuator are faulty, and none of the ECU located on the rear axle, the rear left EMB actuator, and the rear right EMB actuator is faulty, the ECU located on the rear axle controls the rear left EMB actuator and the rear right EMB actuator to complete the braking operation on the vehicle.

(4) If both the left ECU located on the front axle and the front right EMB actuator are faulty, neither of the right ECU located on the front axle and the front left EMB actuator is faulty, and none of the ECU located on the rear axle, the rear left EMB actuator, and the rear right EMB actuator is faulty, the ECU located on the rear axle controls the rear left EMB actuator and a fourth EMB to complete the braking operation on the vehicle.

(5) If both the right ECU located on the front axle and the front left EMB actuator are faulty, neither the left ECU located on the front axle and the front right EMB actuator is faulty, and none of the ECU located on the rear axle, the rear left EMB actuator, and the rear right EMB actuator is faulty, the ECU located on the rear axle controls the rear left EMB actuator and a fourth EMB to complete the braking operation on the vehicle.

(6) If the left ECU located on the front axle or the front left EMB actuator is faulty, neither of the right ECU located on the front axle and the front right EMB actuator is faulty, and none of the ECU located on the rear axle, the rear left EMB actuator, and the rear right EMB actuator is faulty, the right ECU located on the front axle controls the front right EMB actuator, and the ECU located on the rear axle controls at least one of the rear left EMB actuator and the rear right EMB actuator, to complete the braking operation on the vehicle.

(7) If the right ECU located on the front axle or the front right EMB actuator is faulty, neither of the left ECU located on the front axle and the front left EMB actuator is faulty, and none of the ECU located on the rear axle, the rear left EMB actuator, and the rear right EMB actuator is faulty, the left ECU located on the front axle controls the front left EMB actuator, and the ECU located on the rear axle controls at least one of the rear left EMB actuator and the rear right EMB actuator, to complete the braking operation on the vehicle.

An example in which the braking system includes three ECUs and four EMB actuators is used. Refer to the braking system shown in FIG. 2. The three ECUs include the ECU located on the front axle, the left ECU located on the rear axle, and the right ECU located on the rear axle. When the vehicle is currently in the downhill road condition, and the slope of the location of the vehicle is less than the first threshold, the braking system may be implemented in any one of the following possible implementations (1) to (4).

(1) If none of the ECU located on the front axle, the front left EMB actuator, and the front right EMB actuator is faulty, the ECU located on the front axle controls the front left EMB actuator and the front right EMB actuator to complete the braking operation on the vehicle.

(2) If the ECU located on the front axle, the front left EMB actuator, and the front right EMB actuator are all faulty, and none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls the rear right EMB actuator, to complete the braking operation on the vehicle.

(3) If neither of the ECU located on the front axle and the front left EMB actuator is faulty, the front right EMB actuator is faulty, and none of the left ECU located on the rear axle, the rear left EMB actuator, and the rear right EMB actuator is faulty,

the ECU located on the front axle controls the front left EMB actuator, and the left ECU located on the rear axle controls the rear left EMB actuator, to complete the braking operation on the vehicle; or

the ECU located on the front axle controls the front left EMB actuator, and the right ECU located on the rear axle controls the rear right EMB actuator, to complete the braking operation on the vehicle; or

the ECU located on the front axle controls the front left EMB actuator, the left ECU located on the rear axle controls the rear left EMB actuator, and the right ECU located on the rear axle controls the rear right EMB actuator, to complete the braking operation on the vehicle.

(4) If neither of the ECU located on the front axle and the front right EMB actuator is faulty, the front left EMB actuator is faulty, and none of the left ECU located on the rear axle, the rear left EMB actuator, and the rear right EMB actuator is faulty,

the ECU located on the front axle controls the front right EMB actuator, and the left ECU located on the rear axle controls the rear left EMB actuator, to complete the braking operation on the vehicle; or

the ECU located on the front axle controls the front right EMB actuator, and the right ECU located on the rear axle controls the rear right EMB actuator, to complete the braking operation on the vehicle; or

the ECU located on the front axle controls the front right EMB actuator, the left ECU located on the rear axle controls the rear left EMB actuator, and the right ECU located on the rear axle controls the rear right EMB actuator, to complete the braking operation on the vehicle.

An example in which the braking system includes four ECUs and four EMB actuators is used. Refer to the braking system shown in FIG. 4. The three ECUs include the left ECU located on the front axle, the right ECU located on the front axle, the left ECU located on the rear axle, and the right ECU located on the rear axle. When the vehicle is currently in the downhill road condition, and the slope of the location of the vehicle is less than the first threshold, the braking system may be implemented in any one of the following possible implementations (1) to (7).

(1) If none of the left ECU located on the front axle, the right ECU located on the front axle, the front left EMB actuator, and the front right EMB actuator is faulty, the left ECU located on the front axle controls the front left EMB actuator, and the right ECU located on the front axle controls the front right EMB actuator, to jointly complete the braking operation on the vehicle.

(2) If both the left ECU located on the front axle and the right ECU located on the front axle are faulty, and none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls the rear right EMB actuator, to complete the braking operation on the vehicle.

(3) If both the front left EMB actuator and the front right EMB actuator are faulty, and none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls the rear right EMB actuator, to complete the braking operation on the vehicle.

(4) If both the left ECU located on the front axle and the front right EMB actuator are faulty, neither of the right ECU located on the front axle and the front left EMB actuator is faulty, and none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls a fourth EMB, to complete the braking operation on the vehicle.

(5) If both the right ECU located on the front axle and the front left EMB actuator are faulty, neither of the left ECU located on the front axle and the front right EMB actuator is faulty, and none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls a fourth EMB, to complete the braking operation on the vehicle.

(6) If the left ECU located on the front axle is faulty, neither of the right ECU located on the front axle and the front right EMB actuator is faulty, and none of the left ECU located on the rear axle, the rear left EMB actuator, and the rear right EMB actuator is faulty, the right ECU located on the front axle controls the front right EMB actuator, the left ECU located on the rear axle controls the rear left EMB actuator, and the right ECU located on the rear axle controls at least one of the rear right EMB actuator, to complete the braking operation on the vehicle.

(7) If the right ECU located on the front axle is faulty, neither of the left ECU located on the front axle and the front left EMB actuator is faulty, and none of the left ECU located on the rear axle, the right ECU located on the rear axle, the rear left EMB actuator, and the rear right EMB actuator is faulty, the left ECU located on the front axle controls the front left EMB actuator, the left ECU located on the rear axle controls the rear left EMB actuator, and the right ECU located on the rear axle controls at least one of the rear right EMB actuator, to complete the braking operation on the vehicle.

In a possible implementation, when the vehicle is currently in an uphill road condition, and a slope of a location of the vehicle is less than a first threshold, an EMB actuator on the rear axle in the braking system is preferentially used to complete the braking operation.

An example in which the braking system includes three ECUs and four EMB actuators is used. Refer to the braking system shown in FIG. 2. The three ECUs include the ECU located on the front axle, the left ECU located on the rear axle, and the right ECU located on the rear axle. When the vehicle is currently in the uphill road condition, and the slope of the location of the vehicle is less than the first threshold, the braking system may be implemented in any one of the following possible implementations (1) to (7).

(1) If none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls the rear right EMB actuator, to jointly complete the braking operation on the vehicle.

(2) If both the left ECU located on the rear axle and the right ECU located on the rear axle are faulty, and none of the ECU located on the front axle, the front left EMB actuator, and the front right EMB actuator is faulty, the ECU located on the front axle controls the front left EMB actuator and the front right EMB actuator to complete the braking operation on the vehicle.

(3) If both the rear left EMB actuator and the rear right EMB actuator are faulty, and none of the ECU located on the front axle, the front left EMB actuator, and the front right EMB actuator is faulty, the ECU located on the front axle controls the front left EMB actuator and the front right EMB actuator to complete the braking operation on the vehicle.

(4) If both the left ECU located on the rear axle and the rear right EMB actuator are faulty, neither of the right ECU located on the rear axle and the rear left EMB actuator is faulty, and none of the ECU located on the front axle, the front left EMB actuator, and the front right EMB actuator is faulty, the ECU located on the front axle controls the front left EMB actuator and a fourth EMB to complete the braking operation on the vehicle.

(5) If both the right ECU located on the rear axle and the rear left EMB actuator are faulty, neither of the left ECU located on the rear axle and the rear right EMB actuator is faulty, and none of the ECU located on the front axle, the front left EMB actuator, and the front right EMB actuator is faulty, the ECU located on the front axle controls the front left EMB actuator and a fourth EMB to complete the braking operation on the vehicle.

(6) If the left ECU located on the rear axle is faulty, neither of the right ECU located on the rear axle and the rear right EMB actuator is faulty, and none of the ECU located on the front axle, the front left EMB actuator, and the front right EMB actuator is faulty, the right ECU located on the rear axle controls the rear right EMB actuator, and the ECU located on the front axle controls at least one of the front left EMB actuator and the front right EMB actuator, to complete the braking operation on the vehicle.

(7) If the right ECU located on the rear axle is faulty, neither of the left ECU located on the rear axle and the rear left EMB actuator is faulty, and none of the ECU located on the front axle, the front left EMB actuator, and the front right EMB actuator is faulty, the left ECU located on the rear axle controls the rear left EMB actuator, and the ECU located on the front axle controls at least one of the front left EMB actuator and the front right EMB actuator, to complete the braking operation on the vehicle.

An example in which the braking system includes three ECUs and four EMB actuators is used. Refer to the braking system shown in FIG. 3. The three ECUs include the left ECU located on the front axle, the right ECU located on the front axle, and the ECU located on the rear axle. When the vehicle is currently in the uphill road condition, and the slope of the location of the vehicle is less than the first threshold, the braking system may be implemented in any one of the following possible implementations (1) to (4).

(1) If none of the ECU located on the rear axle, the rear left EMB actuator, and the rear right EMB actuator is faulty, the ECU located on the rear axle controls the rear left EMB actuator and the rear right EMB actuator to complete the braking operation on the vehicle.

(2) If the ECU located on the rear axle, the rear left EMB actuator, and the rear right EMB actuator are all faulty, and none of the left ECU located on the front axle, the right ECU located on the front axle, the front left EMB actuator, and the front right EMB actuator is faulty, the left ECU located on the front axle controls the front left EMB actuator, and the right ECU located on the front axle controls the front right EMB actuator, to complete the braking operation on the vehicle.

(3) If neither of the ECU located on the rear axle and the rear left EMB actuator is faulty, the rear right EMB actuator is faulty, and none of the left ECU located on the front axle, the front left EMB actuator, and the front right EMB actuator is faulty,

the ECU located on the rear axle controls the rear left EMB actuator, and the left ECU located on the front axle controls the front left EMB actuator, to complete the braking operation on the vehicle; or the ECU located on the rear axle controls the rear left EMB actuator, and the right ECU located on the front axle controls the front right EMB actuator, to complete the braking operation on the vehicle; or the ECU located on the rear axle controls the rear left EMB actuator, the left ECU located on the front axle controls the front left EMB actuator, and the right ECU located on the front axle controls the front right EMB actuator, to complete the braking operation on the vehicle.

(4) If neither of the ECU located on the rear axle and the rear right EMB actuator is faulty, and the rear left EMB actuator is faulty, and none of the left ECU located on the front axle, the front left EMB actuator, and the front right EMB actuator is faulty,

the ECU located on the rear axle controls the rear right EMB actuator, and the left ECU located on the front axle controls the front left EMB actuator, to complete the braking operation on the vehicle; or the ECU located on the rear axle controls the rear right EMB actuator, and the right ECU located on the front axle controls the front right EMB actuator, to complete the braking operation on the vehicle; or the ECU located on the rear axle controls the rear right EMB actuator, the left ECU located on the front axle controls the front left EMB actuator, and the right ECU located on the front axle controls the front right EMB actuator, to complete the braking operation on the vehicle.

An example in which the braking system includes four ECUs and four EMB actuators is used. Refer to the braking system shown in FIG. 4. The four ECUs include the left ECU located on the front axle, the right ECU located on the front axle, the left ECU located on the rear axle, and the right ECU located on the rear axle. When the vehicle is currently in the uphill road condition, and the slope of the location of the vehicle is less than the first threshold, the braking system may be implemented in any one of the following possible implementations (1) to (7).

(1) If none of the left ECU located on the rear axle, the right ECU located on the rear axle, the rear left EMB actuator, and the rear right EMB actuator is faulty, the left ECU located on the rear axle controls the rear left EMB actuator, and the right ECU located on the rear axle controls the rear right EMB actuator, to jointly complete the braking operation on the vehicle.

(2) If both the left ECU located on the rear axle and the right ECU located on the rear axle are faulty, and none of the left ECU located on the front axle, the right ECU located on the front axle, the front left EMB actuator, and the front right EMB actuator is faulty, the left ECU located on the front axle controls the front left EMB actuator, and the right ECU located on the front axle controls the front right EMB actuator, to complete the braking operation on the vehicle.

(3) If both the rear left EMB actuator and the rear right EMB actuator are faulty, and none of the left ECU located on the front axle, the right ECU located on the front axle, the front left EMB actuator, and the front right EMB actuator is faulty, the left ECU located on the front axle controls the front left EMB actuator, and the right ECU located on the front axle controls the front right EMB actuator, to complete the braking operation on the vehicle.

(4) If both the left ECU located on the rear axle and the rear right EMB actuator are faulty, neither of the right ECU located on the rear axle and the rear left EMB actuator is faulty, and none of the left ECU located on the front axle, the right ECU located on the front axle, the front left EMB actuator, and the front right EMB actuator is faulty, the left ECU located on the front axle controls the front left EMB actuator, and the right ECU located on the front axle controls a second EMB, to complete the braking operation on the vehicle.

(5) If both the right ECU located on the rear axle and the rear left EMB actuator are faulty, neither of the left ECU located on the rear axle and the rear right EMB actuator is faulty, and none of the left ECU located on the front axle, the right ECU located on the front axle, the front left EMB actuator, and the front right EMB actuator is faulty, the left ECU located on the front axle controls the front left EMB actuator, and the right ECU located on the front axle controls a second EMB, to complete the braking operation on the vehicle.

(6) If the left ECU located on the rear axle is faulty, neither of the right ECU located on the rear axle and the rear right EMB actuator is faulty, and none of the left ECU located on the front axle, the front left EMB actuator, and the front right EMB actuator is faulty, the right ECU located on the rear axle controls the rear right EMB actuator, the left ECU located on the front axle controls the front left EMB actuator, and the right ECU located on the front axle controls at least one of the front right EMB actuator, to complete the braking operation on the vehicle.

(7) If the right ECU located on the rear axle is faulty, neither of the left ECU located on the rear axle and the rear left EMB actuator is faulty, and none of the left ECU located on the front axle, the right ECU located on the front axle, the front left EMB actuator, and the front right EMB actuator is faulty, the left ECU located on the rear axle controls the rear left EMB actuator, the left ECU located on the front axle controls the front left EMB actuator, and the right ECU located on the front axle controls at least one of the front right EMB actuator, to complete the braking operation on the vehicle.

In a possible implementation, when the vehicle is currently in a downhill road condition or the vehicle is currently in an uphill road condition, and a slope of a location of the vehicle is greater than a first threshold, four EMB actuators in the braking system are preferentially used to complete the braking operation. An example in which the braking system includes three ECUs and four EMB actuators is used. Refer to the braking system shown in FIG. 3. The three ECUs include the left ECU located on the front axle, the right ECU located on the front axle, and the ECU located on the rear axle. The braking system may be implemented in any one of the following possible implementations.

(1) if none of the left ECU located on the front axle, the right ECU located on the front axle, the ECU located on the rear axle, the front left EMB actuator, the front right EMB actuator, the rear left EMB actuator, and the rear right EMB actuator is faulty, the left ECU located on the front axle controls the front left EMB actuator, the right ECU located on the front axle controls the front right EMB actuator, and the ECU located on the rear axle controls the rear left EMB actuator and the rear right EMB actuator, to complete the braking operation on the vehicle.

(2) If there is a faulty control unit in the left ECU located on the front axle, the right ECU located on the front axle, and the ECU located on the rear axle, or there is a faulty EMB actuator in the front left EMB actuator, the front right EMB actuator, the rear left EMB actuator, and the rear right EMB actuator, a non-faulty control unit controls a non-faulty EMB actuator to complete the braking operation on the vehicle, and increases a clamping force of the non-faulty EMB actuator on a braked wheel.

An example in which the braking system includes four ECUs and four EMB actuators is used. Refer to the braking system shown in FIG. 4. The four ECUs include the left ECU located on the front axle, the right ECU located on the front axle, the left ECU located on the rear axle, and the right ECU located on the rear axle. When the vehicle is currently in the downhill road condition or the vehicle is currently in the uphill road condition, and the slope of the location of the vehicle is greater than the first threshold, the braking system may be implemented in any one of the following possible implementations.

(1) if none of the left ECU located on the front axle, the right ECU located on the front axle, the left ECU located on the rear axle, the right ECU located on the rear axle, the front left EMB actuator, the front right EMB actuator, the rear left EMB actuator, and the rear right EMB actuator is faulty, the left ECU located on the front axle controls the front left EMB actuator, and the right ECU located on the front axle controls the front right EMB actuator, the left ECU located on the rear axle controls the rear left EMB actuator, and the right ECU located on the rear axle controls the rear right EMB actuator, to complete the braking operation on the vehicle.

(2) if there is a faulty control unit in the left ECU located on the front axle, the right ECU located on the front axle, the left ECU located on the rear axle, and the right ECU located on the rear axle, or there is a faulty EMB actuator in the front left EMB actuator, the front right EMB actuator, the rear left EMB actuator, and the rear right EMB actuator, a non-faulty control unit controls a non-faulty EMB actuator to complete the braking operation on the vehicle, and increases a clamping force of the non-faulty EMB actuator on a braked wheel.

In a possible implementation, when the vehicle is currently in a flat-ground road condition, an EMB actuator on the rear axle in the braking system is preferentially used to complete the braking operation.
An example in which the braking system includes three ECUs and four EMB actuators is used. Refer to the braking system shown in FIG. 2. The three ECUs include the ECU located on the front axle, the left ECU located on the rear axle, and the right ECU located on the rear axle. When the vehicle is currently in the flat-ground road condition, the braking system may be implemented in any one of the following possible implementations (1) to (7).

(1) If none of the left ECU located on the rear axle, the right ECU located on the rear axle, the rear left EMB actuator, and the rear right EMB actuator is faulty, the left ECU located on the rear axle controls the rear left EMB actuator, and/or the right ECU located on the rear axle controls the rear right EMB actuator, to complete the braking operation on the vehicle.
(2) If both the left ECU located on the rear axle and the right ECU located on the rear axle are faulty, and none of the ECU located on the front axle, the front left EMB actuator, and the front right EMB actuator is faulty, the ECU located on the front axle controls at least one of the front left EMB actuator and the front right EMB actuator to complete the braking operation on the vehicle.
(3) If both the rear left EMB actuator and the rear right EMB actuator are faulty, and none of the ECU located on the front axle, the front left EMB actuator, and the front right EMB actuator is faulty, the ECU located on the front axle controls at least one of the front left EMB actuator and the front right EMB actuator to complete the braking operation on the vehicle.

(4) If both the left ECU located on the rear axle and the rear right EMB actuator are faulty, and none of the ECU located on the front axle, the front left EMB actuator, and the front right EMB actuator is faulty, the ECU located on the front axle controls at least one of the front left EMB actuator and the front right EMB actuator to complete the braking operation on the vehicle.

(5) If both the right ECU located on the rear axle and the rear left EMB actuator are faulty, and none of the ECU located on the front axle, the front left EMB actuator, and the front right EMB actuator is faulty, the ECU located on the front axle controls at least one of the front left EMB actuator and the front right EMB actuator to complete the braking operation on the vehicle.

(6) If the left ECU located on the rear axle is faulty, and neither of the right ECU located on the rear axle and the rear right EMB actuator is faulty,

the right ECU located on the rear axle controls the rear right EMB actuator to complete the braking operation on the vehicle; or when the ECU located on the front axle is not faulty and there is at least one non-faulty EMB actuator in the front left EMB actuator and the front right EMB actuator, the right ECU located on the rear axle controls the rear right EMB actuator, and the ECU located on the front axle controls the at least one non-faulty EMB actuator in the front left EMB actuator and the front right EMB actuator, to complete the braking operation on the vehicle.

(7) If the right ECU located on the rear axle is faulty, and neither of the left ECU located on the rear axle and the rear left EMB actuator is faulty,

the left ECU located on the rear axle controls the rear left EMB actuator to complete the braking operation on the vehicle; or when the ECU located on the front axle is not faulty and there is at least one non-faulty EMB actuator in the front left EMB actuator and the front right EMB actuator, the left ECU located on the rear axle controls the rear left EMB actuator, and the ECU located on the front axle controls the at least one non-faulty EMB actuator in the front left EMB actuator and the front right EMB actuator, to complete the braking operation on the vehicle.

An example in which the braking system includes three ECUs and four EMB actuators is used. Refer to the braking system shown in FIG. 3. The three ECUs include the left ECU located on the front axle, the right ECU located on the front axle, and the ECU located on the rear axle. When the vehicle is currently in the flat-ground road condition, the braking system may be implemented in any one of the following possible implementations (1) to (7).

(1) If none of the ECU located on the rear axle, the rear left EMB actuator, and the rear right EMB actuator is faulty, the ECU located on the rear axle controls at least one of the rear left EMB actuator and the rear right EMB actuator to complete the braking operation on the vehicle.

(2) If the ECU located on the rear axle, the rear left EMB actuator, and the rear right EMB actuator are all faulty, and none of the left ECU located on the front axle, the right ECU located on the front axle, the front left EMB actuator, and the front right EMB actuator is faulty, the left ECU located on the front axle controls the front left EMB actuator, and/or the right ECU located on the front axle controls the front right EMB actuator, to complete the braking operation on the vehicle.

(3) If neither of the ECU located on the rear axle and the rear left EMB actuator is faulty, and the rear right EMB actuator is faulty,

the ECU located on the rear axle controls the rear left EMB actuator to complete the braking operation on the vehicle; or the ECU located on the rear axle controls the rear left EMB actuator, and the left ECU located on the front axle controls the front left EMB actuator when neither of the left ECU located on the front axle and the front left EMB actuator is faulty, and/or the right ECU located on the front axle controls the front right EMB actuator when neither of the right ECU located on the front axle and the front right EMB actuator is faulty, to complete the braking operation on the vehicle.

(4) If neither of the ECU located on the rear axle and the rear right EMB actuator is faulty, and the rear left EMB actuator is faulty,

the ECU located on the rear axle controls the rear right EMB actuator to complete the braking operation on the vehicle; or the left ECU located on the front axle controls the front left EMB actuator when neither of the left ECU located on the front axle and the front left EMB actuator is faulty, and/or the right ECU located on the front axle controls the front right EMB actuator when neither of the right ECU located on the front axle and the front right EMB actuator is faulty, to complete the braking operation on the vehicle.

An example in which the braking system includes four ECUs and four EMB actuators is used. Refer to the braking system shown in FIG. 4. The four ECUs include the left ECU located on the front axle, the right ECU located on the front axle, the left ECU located on the rear axle, and the right ECU located on the rear axle. When the vehicle is currently in the flat-ground road condition, the braking system may be implemented in any one of the following possible implementations.

(1) If none of the left ECU located on the rear axle, the right ECU located on the rear axle, the rear left EMB actuator, and the rear right EMB actuator is faulty, the left ECU located on the rear axle controls the rear left EMB actuator, and/or the right ECU located on the rear axle controls the rear right EMB actuator, to complete the braking operation on the vehicle.

(2) If the left ECU located on the rear axle or the rear left EMB actuator is faulty, and neither of the right ECU located on the rear axle and the rear right EMB actuator is faulty, the right ECU located on the rear axle controls the rear right EMB actuator to complete the braking operation on the vehicle.

(3) If the right ECU located on the rear axle or the rear right EMB actuator is faulty, and neither of the left ECU located on the rear axle and the rear left EMB actuator is faulty, the right ECU located on the rear axle controls the rear right EMB actuator to complete the braking operation on the vehicle.

(4) If both the left ECU located on the rear axle and the right ECU located on the rear axle are faulty, and neither of the left ECU located on the front axle and the front left EMB actuator is faulty, the left ECU located on the front axle controls the front left EMB actuator.

(5) If both the left ECU located on the rear axle and the right ECU located on the rear axle are faulty, and none of the left ECU located on the front axle, the right ECU located on the front axle, the front left EMB actuator, and the front right EMB actuator is faulty, the left ECU located on the front axle controls the front left EMB actuator, and the right ECU located on the front axle controls the front right EMB actuator.

In the foregoing implementations, the slope may be a longitudinal slope.

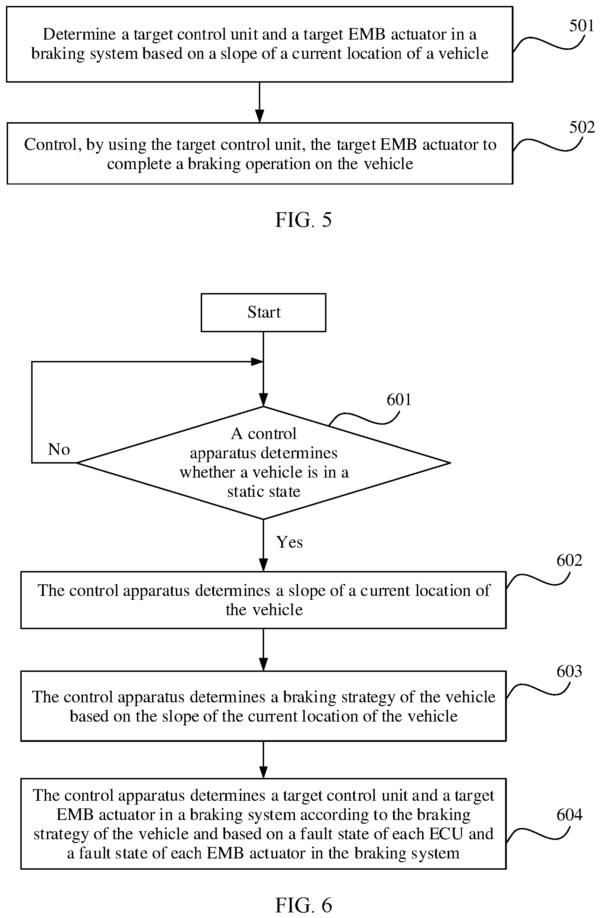

Embodiments of this application further provide a control method for a braking system. For a structure of the braking system, refer to the descriptions in the foregoing embodiments. Details are not described herein again. The control method may be applied to a control apparatus in the braking system. The control apparatus may be at least one control unit in the braking system. As shown in FIG. 5, the control method may include the following steps.

Step 501: Determine a target control unit and a target EMB actuator in the braking system based on a slope of a current location of a vehicle.

In a possible implementation, step 501 may be implemented in the following manner: determining a braking strategy of the vehicle based on the slope of the current location of the vehicle, and determining the target control unit and the target EMB actuator in the braking system according to the braking strategy of the vehicle.

In another possible implementation, the target control unit and the target EMB actuator in the braking system may be determined according to the braking strategy of the vehicle and based on a fault state of each ECU and a fault state of each EMB actuator in the braking system.

Before step 501, the control apparatus may further receive a parking signal. If the control apparatus receives the parking signal, it indicates that there is a braking requirement. In this case, the control apparatus starts to perform step 501.

In a possible solution, the braking system shown in FIG. 4 is used as an example. The control system includes four ECUs and four EMB actuators. The control apparatus is any one of the four ECUs. For example, the control apparatus is the left ECU located on the front axle; after the left ECU located on the front axle receives a parking signal, the left ECU located on the front axle may perform step 501; and after the target EMB actuator for performing a braking operation is determined, the target EMB actuator is controlled to perform the braking operation. That is, step 501 is performed by one ECU in the braking system to determine the target EMB actuator.

For example, the target EMB actuator is the rear left EMB actuator and the rear right EMB actuator. In this case, the left ECU located on the front axle may send a braking indication to the left ECU located on the rear axle and the right ECU located on the rear axle. After receiving the braking indication, the left ECU located on the rear axle controls the rear left EMB actuator to clamp a rear left wheel, and the right ECU located on the rear axle controls the rear right EMB actuator to clamp a rear right wheel. In this way, parking of the vehicle is implemented. It should be understood that the target ECU may alternatively include the left ECU located on the front axle. For example, the target ECU includes the left ECU located on the front axle and the right ECU located on the rear axle. In this case, the left ECU located on the front axle sends a braking indication to the right ECU located on the rear axle, and controls the front left EMB actuator to clamp a front left wheel. After receiving the braking indication, the right ECU located on the rear axle controls the rear right EMB actuator to clamp a rear right wheel. In this way, parking of the vehicle is implemented.

In another possible solution, the braking system shown in FIG. 4 is used as an example. The control system includes four ECUs and four EMB actuators. Each of the four ECUs may serve as the control apparatus. In other words, the four ECUs may receive a parking signal, and separately perform step 501. When any ECU of the four ECUs determines the target EMB actuator, and if the ECU is connected to the target EMB actuator, the ECU serves as the target ECU to control the target EMB actuator connected to the ECU, to implement parking of the vehicle.

For example, the left ECU located on the front axle and the right ECU located on the rear axle respectively determine the front left EMB actuator and the rear right EMB actuator as the target EMB actuator. In this case, the left ECU located on the front axle controls the front left EMB actuator to clamp a front left wheel, and the right ECU located on the rear axle controls the rear right EMB actuator to clamp a rear right wheel, to implement parking of the vehicle.

In step 501, the parking signal may be implemented in a plurality of implementations.

In a possible implementation, the parking signal may be triggered by a driver, a parking control button (namely, EPB Switch) may be disposed in a cockpit of the vehicle, the parking control button may be electrically connected to the control apparatus, and the driver may send the parking signal by activating the parking control button.

In another possible implementation, the parking signal may be triggered by a driver stepping on a brake pedal.

In still another possible implementation, the parking signal may be triggered by shifting a gear shifter into a park gear (namely, P gear).

In still another possible implementation, the parking signal may be sent by an automated driving system or an assisted driving system.

In a possible implementation, before step 501, the control apparatus may further determine a running status of the vehicle. Then, when the running status of the vehicle is a static state, the target control unit and the target EMB actuator in the braking system are determined according to the braking strategy of the vehicle and based on the fault state of each ECU and the fault state of each EMB actuator in the braking system. Alternatively, when the parking signal is received and the running status of the vehicle is a static state or a low-speed moving state, the target control unit and the target EMB actuator in the braking system are determined according to the braking strategy of the vehicle and based on the fault state of each ECU and the fault state of each EMB actuator in the braking system.

With reference to a specific example, the following describes how to determine the target control unit and the target EMB actuator in the braking system according to the braking strategy of the vehicle and based on the fault state of each ECU and the fault state of each EMB actuator in the braking system. As shown in FIG. 6, this may be implemented by using steps 601 to 606.

Step 601: The control apparatus determines whether the vehicle is in the static state. If yes, perform step 602; or if no, continue to perform step 601.

The running status of the vehicle may include the static state or a moving state. Specifically, when the control apparatus receives the parking signal and the vehicle is in the static state when the control apparatus receives the parking signal, it indicates that the vehicle has the braking requirement, and a braking process for the vehicle may continue. When the control apparatus receives the parking signal and the vehicle is in the moving state when the control apparatus receives the parking signal, it indicates that the vehicle does not have the braking requirement, and the braking process for the vehicle does not continue, that is, no subsequent operation is performed.

For example, the control apparatus may estimate a speed of the vehicle, for example, estimate the speed of the vehicle based on a wheel speed, and then determine the running status of the vehicle based on the speed of the vehicle. If the speed of the vehicle is less than or equal to a speed threshold, the control apparatus determines that the vehicle is in the static state. For example, the speed threshold may be set to 3 km/h. A specific value of the speed threshold is not limited in embodiments of this application, and may be set based on an actual requirement. If the speed of the vehicle is greater than the speed threshold, the control apparatus may determine that the vehicle is in the moving state.

It should be understood that step 601 is an optional step.

Step 602: The control apparatus determines a slope of a current location of the vehicle.

The slope in this embodiment of this application may be, for example, a longitudinal slope. The following uses the longitudinal slope as an example for description. Details are not described below again.

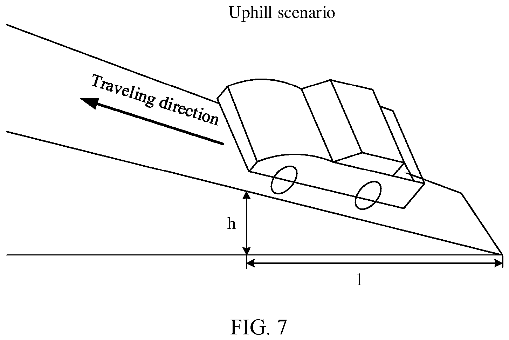

The control apparatus may estimate the longitudinal slope. For example, the longitudinal slope of the current location of the vehicle is determined by a ratio of a vertical height of a ramp to a horizontal distance of the ramp at the location of the vehicle. For example, an inertia measurement unit (Inertial Measurement Unit, IMU) sensor is installed on the vehicle, and may be configured to calculate the longitudinal slope. For a specific calculation principle, refer to an example of an uphill scenario of the vehicle shown in FIG. 7.

As shown in FIG. 7, in a process in which the vehicle travels in an uphill road condition, a vertical height of a ramp at a location of the vehicle is h, and a horizontal distance of the ramp at the location of the vehicle is l. In this case, a longitudinal slope *slope* may be calculated through the following formula:

$$slope = \frac{h}{l} * 100\%$$

After calculating the longitudinal slope of the current location of the vehicle, the control apparatus continues to perform step 603.

Step 603: The control apparatus determines the braking strategy of the vehicle based on the slope of the current location of the vehicle.

The braking strategy of the vehicle is used to determine a specific EMB actuator that is preferentially selected to perform the braking operation. The braking strategy of the vehicle may include any one of the following braking strategies (a) to (e).

(a) When the vehicle is currently in an uphill parking road condition, and the longitudinal slope of the current location of the vehicle is a medium slope (for example, the longitudinal slope is greater than a second threshold and less than or equal to a first threshold), an EMB actuator on the rear axle is preferentially used for clamping to implement braking of the vehicle. For example, the second threshold is 3%, and the first threshold is 30%. When the vehicle is currently in the uphill parking road condition, a vertical load of the vehicle is mainly concentrated on the rear axle. In this case, if an EMB actuator on the front axle is used for clamping, more energy is required, and a higher power is consumed. Therefore, when the vehicle is uphill and the longitudinal slope is the medium slope, the EMB actuator on the rear axle is preferentially used for clamping. This can save energy. When an ECU on the rear axle or the EMB actuator on the rear axle is faulty, from the perspective of energy saving and redundancy, a non-faulty EMB actuator on the rear axle is preferentially selected for clamping, and to further improve the parking capability, at least one EMB actuator on the front axle can be further used for clamping at the same time. This improves safety of the vehicle and a driver.

It should be understood that a longitudinal slope range corresponding to the medium slope in embodiments of this application may be between 3% and 30%, and the longitudinal slope range corresponding to the medium slope may alternatively be adjusted to another value. A specific value of the longitudinal slope range corresponding to the medium slope is not limited herein. Similarly, a specific value of a longitudinal slope range corresponding to a large slope or a small slope (or a flat ground) in the following is not limited in this application. Details are not described below again.

(b) When the vehicle is currently in a downhill parking road condition, and the longitudinal slope of the current location of the vehicle is a medium slope (for example, the longitudinal slope is greater than a second threshold and less than or equal to a first threshold), an EMB actuator on the front axle is preferentially used for clamping to implement braking of the vehicle. When the vehicle is currently in the downhill parking road condition, a vertical load of the vehicle is mainly concentrated on the front axle. In this case, if an EMB actuator on the rear axle is used for clamping, more energy is required, and a higher power is consumed. Therefore, when the vehicle is downhill and the longitudinal slope is the medium slope, the EMB actuator on the front axle is preferentially selected for clamping. This can save energy. When an ECU on the front axle or the EMB actuator on the front axle is faulty, from the perspective of energy saving and redundancy, a non-faulty EMB actuator on the front axle is preferentially selected for clamping, and to further improve the parking capability, at least one EMB actuator on the rear axle can be further used for clamping at the same time. This improves safety of the vehicle and a driver.

(c) When the longitudinal slope of the current location of the vehicle is a large slope (for example, the longitudinal slope is greater than a first threshold), regardless of whether the vehicle is currently in an uphill parking road condition or a downhill parking road condition, the four EMB actuators on the front axle and the rear axle are preferentially used to simultaneously perform clamping to implement braking of the vehicle. When the longitudinal slope of the current location of the vehicle is large, separately using the EMB actuator on the front axle or the EMB actuator on the rear axle may not provide a sufficient parking capability, and it cannot be ensured that braking of the vehicle can be implemented. Therefore, in this case, the four EMB actuators on the front axle and the rear axle are used to simultaneously perform clamping, to improve safety. When a part of ECUs or a part of EMB actuators are faulty, from the perspective of redundancy and safety, a non-faulty ECU may be used to control another non-faulty EMB actuator to perform clamping, and increase a clamping force of the non-faulty EMB actuator, to improve the parking capability.

(d) When the vehicle is currently in a flat-ground parking road condition, that is, the longitudinal slope of the current location of the vehicle is a small slope (for example, the longitudinal slope is less than a second threshold), which may also be understood that the vehicle is on a flat ground, an EMB actuator on the rear axle is preferentially used for clamping to implement braking of the vehicle. In an implementation, when the longitudinal slope of the current location of the vehicle is small or the vehicle is on the flat ground, an EMB actuator on the front axle or the rear axle may be separately used, to implement braking of the vehicle. In another implementation, because a power of an EMB actuator on the rear axle is less than a power of an EMB actuator on the front axle, the EMB actuator on the rear axle is preferentially used for clamping, so that an energy saving effect can be further implemented. In still another possible implementation, when an ECU or EMB actuator on the rear axle is faulty, from the perspective of energy saving and redundancy, a non-faulty EMB actuator on the rear axle is preferentially used for clamping. In addition, a clamping force of the non-faulty EMB actuator may be further increased, to further improve the parking capability. In still another possible implementation, when ECUs or EMB actuators on the rear axle are all faulty, from the perspective of redundancy, an EMB actuator on the front axle is used for clamping. In addition, a clamping force of a non-faulty EMB actuator may be further increased, to further improve the parking capability.

After the braking strategy of the vehicle is determined, step 604 continues to be performed.

Step 604: The control apparatus determines the target control unit and the target EMB actuator in the braking system according to the braking strategy of the vehicle and based on the fault state of each ECU and the fault state of each EMB actuator in the braking system.

Herein, the running status of the ECU or EMB actuator may include faulty (or may be failed) or non-faulty (or may not be failed).

The target EMB actuator in step 604 is an EMB actuator configured to perform a braking operation in the braking system.

The following describes in detail a specific implementation of step 604 with reference to several specific examples.

**Example 1**

The braking system shown in FIG. 1 and the braking strategy (a) are used as an example. In step 604, determining the target ECU and the target EMB actuator according to the braking strategy (a) and based on running statuses of the two ECUs and running statuses of the four EMB actuators in the braking system shown in FIG. 1 may be implemented in any one of the following manners.

Manner 1: If the ECU located on the rear axle in the braking system is not faulty, and neither of the two EMB actuators on the rear axle is faulty, the ECU actuator located on the rear axle is determined as the target ECU, and the two EMB actuators on the rear axle are determined as the target EMB actuator.

Manner 2: If one EMB actuator on the rear axle in the braking system is faulty, a non-faulty EMB actuator on the rear axle and at least one EMB actuator on the front axle are determined as the target EMB actuator, and the ECU located on the rear axle and the ECU located on the front axle are determined as the target ECU.

Manner 3: If the ECU located on the rear axle in the braking system is faulty or both the two EMB actuators on the rear axle are faulty, the two EMB actuators on the front axle are determined as the target EMB actuator, and the ECU located on the front axle is determined as the target ECU.

**Example 2**

The braking system shown in FIG. 2 and the braking strategy (a) are used as an example. In step 604, determining the target ECU and the target EMB actuator according to the braking strategy (a) and based on running statuses of the three ECUs and running statuses of the four EMB actuators in the braking system shown in FIG. 2 may be implemented in the following manner:

if neither of the two ECUs located on the rear axle in the braking system is faulty and neither of the two EMB actuators on the rear axle is faulty, determining the two EMB actuators on the rear axle as the target EMB actuator, and determining the two ECUs located on the rear axle as the target ECU; or
if one EMB actuator on the rear axle in the braking system is faulty, determining a non-faulty EMB actuator on the rear axle and at least one EMB actuator on the front axle as the target EMB actuator, and determining an ECU configured to control the non-faulty EMB actuator on the rear axle and the ECU located on the front axle as the target ECU; or
if one ECU located on the rear axle in the braking system is faulty, and the other ECUs and the EMB actuators are not faulty, determining an EMB actuator connected to a non-faulty ECU on the rear axle and at least one EMB actuator on the front axle as the target EMB actuator, and determining the non-faulty ECU on the rear axle and an ECU configured to control the at least one EMB actuator on the front axle as the target ECU; or
if the two ECUs located on the rear axle in the braking system are faulty or the two EMB actuators on the rear axle are faulty, determining the two EMB actuators on the front axle as the target EMB actuator, and determining the two ECUs located on the front axle as the target ECU.

**Example 3**

The braking system shown in FIG. 3 and the braking strategy (a) are used as an example. In step 604, determining the target ECU and the target EMB actuator according to the braking strategy (a) and based on running statuses of the three ECUs and running statuses of the four EMB actuators in the braking system shown in FIG. 3 may be implemented in the following manner:

if none of the ECU located on the rear axle and the two EMB actuators on the rear axle in the braking system is faulty, determining the two EMB actuators on the rear axle as the target EMB actuator, and determining the ECU located on the rear axle as the target ECU; or determining the two EMB actuators on the rear axle and at least one EMB actuator on the front axle as the target EMB actuator, and determining the ECU located on the rear axle and an ECU configured to control the at least one EMB actuator on the front axle as the target ECU; or
if one EMB actuator on the rear axle in the braking system is faulty, determining a non-faulty EMB actuator on the rear axle and at least one EMB actuator on the front axle as the target EMB actuator, and determining the ECU located on the rear axle and an ECU configured to control the at least one EMB actuator on the front axle as the target ECU; or

if the ECU on the rear axle in the braking system is faulty or the two EMB actuators on the rear axle are faulty, determining the two EMB actuators on the front axle as the target EMB actuator, and determining the two ECUs located on the front axle as the target ECU.

**Example 4**

The braking system shown in FIG. 4 and the braking strategy (a) are used as an example. In step 604, determining the target EMB actuator according to the braking strategy (a) and based on running statuses of the four ECUs and running statuses of the four EMB actuators in the braking system shown in FIG. 4 may be implemented in the following manner:

if none of the two ECUs located on the rear axle in the braking system and the two EMB actuators on the rear axle is faulty, determining the two EMB actuators on the rear axle as the target EMB actuator, and determining the two ECUs located on the rear axle as the target ECU; or determining the two EMB actuators on the rear axle and at least one EMB actuator on the front axle as the target EMB actuator, and determining the two ECUs located on the rear axle and an ECU configured to control the at least one EMB actuator on the front axle as the target ECU; or

if one ECU located on the rear axle in the braking system is faulty, determining an EMB actuator connected to a non-faulty ECU located on the rear axle and at least one EMB actuator on the front axle as the target EMB actuator, and determining the non-faulty ECU located on the rear axle and an ECU configured to control the at least one EMB actuator on the front axle as the target ECU; or

if one EMB actuator on the rear axle in the braking system is faulty, determining a non-faulty EMB actuator on the rear axle and at least one EMB actuator on the front axle as the target EMB actuator, and determining an ECU configured to control the non-faulty EMB actuator on the rear axle and an ECU configured to control the at least one EMB actuator on the front axle as the target ECU; or

if the two ECUs located on the rear axle in the braking system or the two EMB actuators on the rear axle are faulty, determining the two EMB actuators on the front axle as the target EMB actuator, and determining the two ECUs located on the front axle as the target ECU.

**Example 5**

The braking system shown in FIG. 1 and the braking strategy (b) are used as an example. In step 604, determining the target ECU and the target EMB actuator according to the braking strategy (b) and based on running statuses of the two ECUs and running statuses of the four EMB actuators in the braking system shown in FIG. 1 may be implemented in the following manner:

if the ECU located the front axle in the braking system is not faulty and neither of the two EMB actuators on the front axle is faulty, determining the two EMB actuators on the front axle as the target EMB actuator, and determining the ECU located on the front axle as the target ECU; or

if one EMB actuator on the front axle in the braking system is faulty, determining a non-faulty EMB actuator on the front axle and at least one EMB actuator on the rear axle as the target EMB actuator, and determining the ECU located on the front axle and the ECU configured to control the at least one EMB actuator on the rear axle as the target ECU; or

if the ECU located on the front axle in the braking system is faulty or the two EMB actuators on the front axle are faulty, determining the two EMB actuators on the rear axle as the target EMB actuator, and determining the ECU located on the rear axle as the target ECU.

It should be noted that the braking system shown in FIG. 2 and the braking strategy (b) are used as an example. For a specific implementation of step 604, refer to the implementation of Example 5. Details are not described herein again.

**Example 6**

The braking system shown in FIG. 3 and the braking strategy (b) are used as an example. In step 604, determining the target ECU and the target EMB actuator according to the braking strategy (b) and based on running statuses of the three ECUs and running statuses of the four EMB actuators in the braking system shown in FIG. 3 may be implemented in the following manner:

if the two ECUs located on the front axle in the braking system and the two EMB actuators on the front axle are not faulty, determining the two EMB actuators on the front axle as the target EMB actuator, and determining the two ECUs located on the front axle as the target ECU; or determining the two EMB actuators on the front axle and at least one EMB actuator on the rear axle as the target EMB actuator, and determining the two ECUs located on the front axle and the ECU configured to control the at least one EMB actuator on the rear axle as the target ECU; or

if one EMB actuator on the front axle in the braking system is faulty, determining a non-faulty EMB actuator on the front axle and at least one EMB actuator on the rear axle as the target EMB actuator, and determining the ECU located on the rear axle and an ECU configured to control the non-faulty EMB actuator on the front axle as the target ECU; or

if one ECU actuator located on the front axle in the braking system is faulty, and an EMB actuator connected to a non-faulty ECU located on the front axle is not faulty, determining the EMB actuator connected to the non-faulty ECU located on the front axle and at least one EMB actuator on the rear axle as the target EMB actuator, and determining the non-faulty ECU located on the front axle and the ECU configured to control the at least one EMB actuator on the rear axle as the target ECU; or

If the two ECUs located on the front axle in the braking system are faulty or the two EMB actuators on the front axle are faulty, determining the two EMB actuators on the rear axle as the target EMB actuator, and determining the ECU located on the rear axle as the target ECU.

It should be noted that the braking system shown in FIG. 4 and the braking strategy (b) are used as an example. For a specific implementation of step 604, refer to the implementation of Example 6. Details are not described herein again.

### Example 7

The braking system shown in FIG. 1 and the braking strategy (c) are used as an example. In step 604, determining the target ECU and the target EMB actuator according to the braking strategy (c) and based on running statuses of the two ECUs and running statuses of the four EMB actuators in the braking system shown in FIG. 1 may be implemented in the following manner:

if none of the ECUs and the EMB actuators in the braking system is faulty, determining the four EMB actuators as the target EMB actuator, and determining the ECU located on the front axle and the ECU located on the rear axle as the target ECU; or

if any one or more EMB actuators in the braking system are faulty, determining a non-faulty EMB actuator in the braking system as the target EMB actuator, and determining an ECU configured to control the non-faulty EMB in the braking system as the target ECU; or

if any ECU in the braking system is faulty, determining an EMB actuator connected to a non-faulty ECU in the braking system as the target EMB actuator, and determining the non-faulty ECU in the braking system as the target ECU.

It should be noted that any braking system in FIG. 2 to FIG. 4 and the braking strategy (c) are used as an example. For a specific implementation of step 604, refer to the implementation of Example 7. Details are not described herein again.

### Example 8

The braking system shown in FIG. 1 and the braking strategy (d) are used as an example. In step 604, determining the target ECU and the target EMB actuator according to the braking strategy (d) and based on running statuses of the two ECUs and running statuses of the four EMB actuators in the braking system shown in FIG. 1 may be implemented in the following manner:

if the ECU located on the rear axle in the braking system is not faulty and neither of the two EMB actuators on the rear axle is faulty, determining at least one EMB actuator on the rear axle as the target EMB actuator, and determining the ECU located on the rear axle as the target ECU; or

if one EMB actuator on the rear axle in the braking system is faulty, determining a non-faulty EMB actuator on the rear axle as the target EMB actuator, and determining the ECU located on the rear axle as the target ECU; or determining a non-faulty EMB actuator on the rear axle and at least one EMB actuator on the front axle as the target EMB actuator, and determining the ECU located on the front axle and the ECU located on the rear axle as the target ECU; or

if the ECU located on the rear axle in the braking system is faulty or the two EMB actuators on the rear axle are faulty, determining at least one EMB actuator on the front axle as the target EMB actuator, and determining the ECU located on the front axle as the target ECU.

It should be noted that the braking system shown in FIG. 3 and the braking strategy (d) are used as an example. For a specific implementation of step 604, refer to the implementation of Example 8. Details are not described herein again.

### Example 9

The braking system shown in FIG. 2 and the braking strategy (d) are used as an example. In step 604, determining the target ECU and the target EMB actuator according to the braking strategy (d) and based on running statuses of the three ECUs and running statuses of the four EMB actuators in the braking system shown in FIG. 2 may be implemented in the following manner:

if neither of the two ECUs located on the rear axle in the braking system is faulty and neither of the two EMB actuators on the rear axle is faulty, determining at least one EMB actuator on the rear axle as the target EMB actuator, and determining an ECU that is located on the rear axle and that is configured to control the at least one EMB actuator as the target ECU; or

if one EMB actuator on the rear axle in the braking system is faulty, determining a non-faulty EMB actuator on the rear axle as the target EMB actuator, and determining an ECU that is located on the rear axle and that is configured to control the non-faulty EMB actuator as the target ECU; or determining a non-faulty EMB actuator on the rear axle and at least one EMB actuator on the front axle as the target EMB actuator, and determining an ECU that is located on the rear axle and that is configured to control the non-faulty EMB actuator and the ECU located on the front axle as the target ECU; or

if one ECU located on the rear axle in the braking system is faulty, determining an EMB actuator connected to a non-faulty ECU located on the rear axle as the target EMB actuator, and determining the non-faulty ECU located on the rear axle as the target ECU; or determining an EMB actuator connected to a non-faulty ECU located on the rear axle and at least one EMB actuator on the front axle as the target EMB actuator, and determining the non-faulty ECU located on the rear axle and the ECU located on the front axle as the target ECU; or

if the two ECUs located on the rear axle in the braking system are faulty or the two EMB actuators on the rear axle are faulty, determining at least one EMB actuator on the front axle as the target EMB actuator, and determining the ECU located on the front axle as the target ECU.

It should be noted that the braking system shown in FIG. 4 and the braking strategy (d) are used as an example. For a specific implementation of step 604, refer to the implementation of Example 9. Details are not described herein again.

After determining the target EMB actuator and the target control unit as shown in FIG. 6, the control apparatus continues to perform step 502.

Step 502: Control, by using the target control unit, the target EMB actuator to complete a braking operation on the vehicle.

For example, Example 1 is still used. An example in which the two EMB actuators on the rear axle in the braking system shown in FIG. 1 are the target EMB actuator is used. For example, the control apparatus is the ECU located on the front axle. After the target EMB actuator is determined, the ECU located on the front axle may indirectly control, by using the ECU located on the rear axle, the rear left EMB actuator and the rear right EMB actuator to perform clamping, to complete the braking operation on the vehicle.

For another example, Example 1 is still used. An example in which the front right EMB actuator and the rear right EMB actuator in the braking system shown in FIG. 1 are the target EMB actuator is used. For example, the control apparatus is the ECU located on the front axle. After the target EMB actuator is determined, the ECU located on the front axle may directly control the front right EMB actuator to perform clamping, and the ECU located on the front axle may indirectly control, by using the ECU located on the rear axle, the rear right EMB actuator to perform clamping, to complete the braking operation on the vehicle.

For another example, Example 1 is still used. An example in which the two EMB actuators on the front axle in the braking system shown in FIG. 1 are the target EMB actuator is used. For example, the control apparatus is the ECU located on the front axle. After the target EMB actuator is determined, the ECU located on the front axle may directly control the front left EMB actuator and the front right EMB actuator to perform clamping, to complete the braking operation on the vehicle.

In embodiments of this application, EMB actuators respectively integrated into four rims of the vehicle may be used to implement an EPB function of higher redundancy without increasing costs. For example, when a part of ECUs fail, another part of the ECUs may be used to complete redundancy control on a part of the EMB actuators. When a part of the EMB actuators fail, another part of the EMB actuators may be used to perform a braking operation. This can improve a parking capability of the vehicle.

The following describes the control method for the parking system provided in embodiments of this application with reference to a specific example.

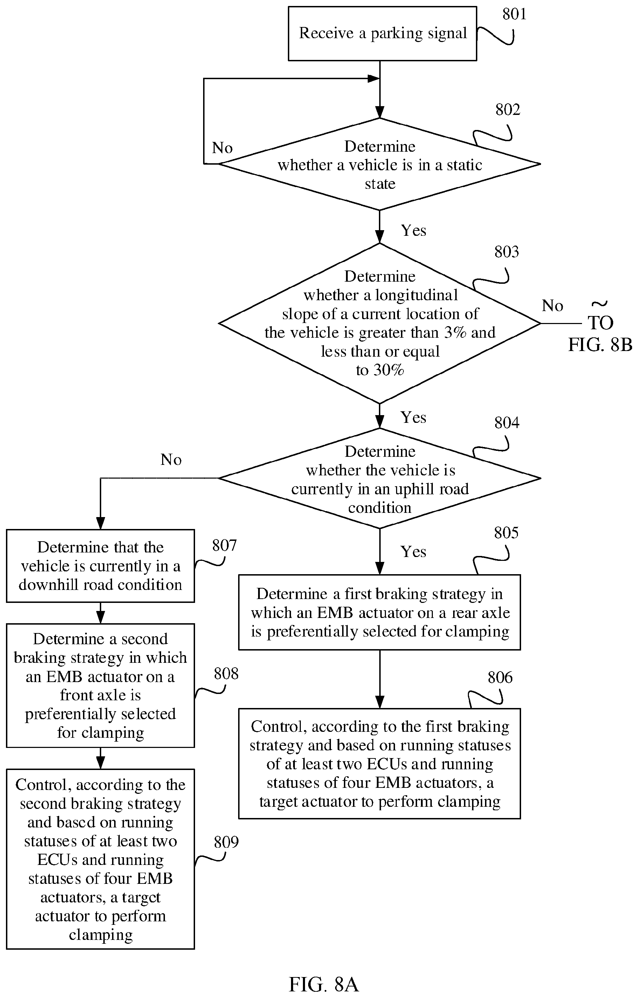

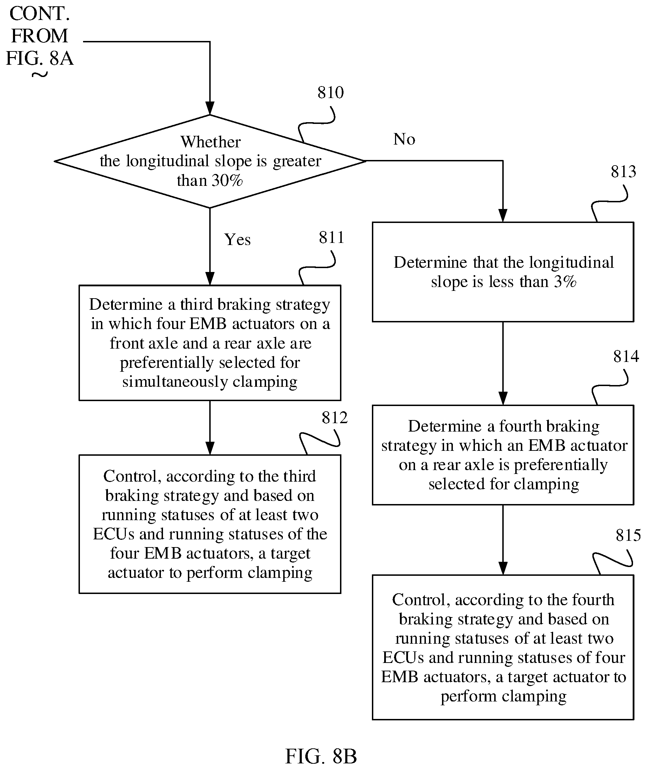

As shown in FIG. 8A and FIG. 8B, the control method includes the following steps.

Step 801: A control apparatus receives a parking signal.

Step 802: The control apparatus determines whether a vehicle is in a static state. If yes, perform step 803; or if no, continue to perform step 802.

Herein, for a specific implementation of step 801 and step 802, refer to the related descriptions of step 601 and step 602. Details are not described herein again.

Step 803: The control apparatus determines whether a longitudinal slope of a current location of the vehicle is greater than 3% and less than or equal to 30%. If yes, perform step 804; or if no, perform step 810.

Step 804: The control apparatus determines whether the vehicle is currently in an uphill road condition. If yes, perform step 805; or if no, perform step 807.

Step 805: The control apparatus determines a first braking strategy in which an EMB actuator on a rear axle is preferentially selected for clamping.

Herein, for the first braking strategy, refer to the related descriptions of the braking strategy (a). Details are not described herein again.

Step 806: The control apparatus determines to control, according to the first braking strategy and based on running statuses of at least two ECUs and running statuses of four EMB actuators, a target actuator to perform clamping.

Herein, for a specific implementation of step 806, refer to the related descriptions in Example 1 to Example 4. Details are not described herein again.

Step 807: The control apparatus determines that the vehicle is currently in a downhill road condition.

Step 808: The control apparatus determines a second braking strategy in which an EMB actuator on a front axle is preferentially selected for clamping.

Herein, for the second braking strategy, refer to the related descriptions of the braking strategy (b). Details are not described herein again.

Step 809: The control apparatus controls, according to the second braking strategy and based on running statuses of at least two ECUs and running statuses of four EMB actuators, a target actuator to perform clamping.

Herein, for a specific implementation of step 809, refer to the related descriptions in Example 5 and Example 6. Details are not described herein again.

Step 810: The control apparatus determines whether the longitudinal slope is greater than 30%. If yes, perform step 811; or if no, perform step 813.

Step 811: The control apparatus determines a third braking strategy in which four EMB actuators on a rear axle and a rear axle are preferentially selected for simultaneously clamping.

Herein, for the third braking strategy, refer to the related descriptions of the braking strategy (c). Details are not described herein again.

Step 812: The control apparatus controls, according to the third braking strategy and based on running statuses of at least two ECUs and running statuses of the four EMB actuators, a target actuator to perform clamping.

Herein, for a specific implementation of step 812, refer to the related descriptions in Example 7. Details are not described herein again.

Step 813: The control apparatus determines that the longitudinal slope is less than 3%.

Step 814: The control apparatus determines a fourth braking strategy in which an EMB actuator on a rear axle is preferentially selected for clamping.

Herein, for the fourth braking strategy, refer to the related descriptions of the braking strategy (d). Details are not described herein again.

Step 815: The control apparatus controls, according to the fourth braking strategy and based on running statuses of at least two ECUs and running statuses of four EMB actuators, a target actuator to perform clamping.

Herein, for a specific implementation of step 815, refer to the related descriptions in Example 8 and Example 9. Details are not described herein again.

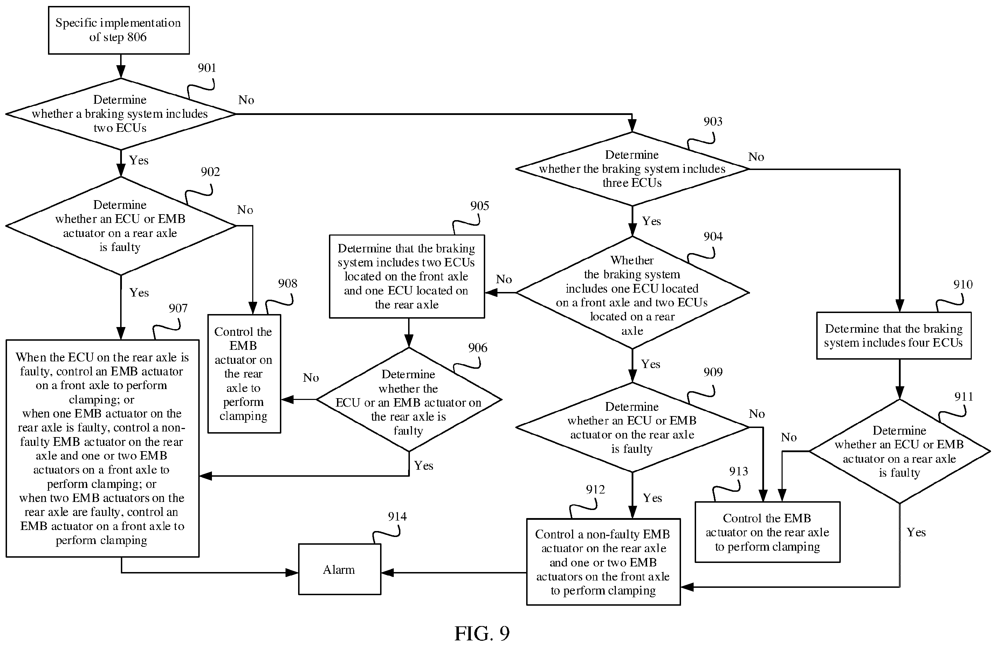

In a possible implementation, in step 806, that the control apparatus determines to control, according to the first braking strategy and based on running statuses of at least two ECUs and running statuses of four EMB actuators, a target actuator to perform clamping may be implemented by using an example shown in FIG. 9. As shown in FIG. 9, the following steps are included.

Step 901: The control apparatus determines whether a braking system includes two ECUs. If yes, perform step 902; or if no, perform step 903.

Herein, when the braking system includes the two ECUs, for a structure of the braking system, refer to FIG. 1.

Step 902: The control apparatus determines whether an ECU or EMB actuator on a rear axle is faulty. If yes, perform step 907; or if no, perform step 908.

Step 903: The control apparatus determines whether the braking system includes three ECUs. If yes, perform step 904; or if no, perform step 910.

Herein, when the braking system includes the three ECUs, a structure of the braking system may be the structure shown in FIG. 2 or FIG. 3. In this case, the braking system may be further determined according to step 904.

Step 904: The control apparatus determines whether the braking system includes one ECU located on a front axle and two ECUs located on a rear axle. If yes, perform step 909; or if no, perform step 905.

Herein, when the braking system includes the three ECUs, the braking system includes the one ECU located on the front axle and the two ECUs located on the rear axle. In this case, for a structure of the braking system, refer to the structure shown in FIG. 2.

Step 905: The control apparatus determines that the braking system includes two ECUs located on the front axle and one ECU located on the rear axle.

Herein, when the braking system includes the three ECUs, the braking system includes the two ECUs located on the front axle and the one ECU located on the rear axle. In this case, for a structure of the braking system, refer to the structure shown in FIG. 3.

Step 906: The control apparatus determines whether the ECU located on the rear axle or an EMB actuator on the rear axle is faulty. If yes, perform step 907; or if no, perform step 908.

Step 907: When the ECU located on the rear axle is faulty, the control apparatus controls an EMB actuator on the front axle to perform clamping; when one EMB actuator on the rear axle is faulty, the control apparatus controls a non-faulty EMB actuator on the rear axle and one or two EMB actuators on the front axle to perform clamping; or when two EMB actuators on the rear axle are faulty, the control apparatus controls an EMB actuator on the front axle to perform clamping.

Step 908: The control apparatus controls the EMB actuator on the rear axle to perform clamping.

Step 909: The control apparatus determines whether an ECU or EMB actuator on the rear axle is faulty. If yes, perform step 912; or if no, perform step 913.

Step 910: The control apparatus determines that the braking system includes four ECUs.

Step 911: The control apparatus determines whether an ECU or EMB actuator on a rear axle is faulty. If yes, perform step 912; or if no, perform step 913.

Step 912: The control apparatus controls a non-faulty EMB actuator on the rear axle and one or two EMB actuators on a front axle to perform clamping.

Step 913: The control apparatus controls the EMB actuator on the rear axle to perform clamping.

Step 914: The control apparatus sends an alarm signal.

The alarm signal in embodiments of this application may be implemented in at least one of the following manners: lighting, voice, or text. Details are not described below again.

According to the example shown in FIG. 9, optimal EPB braking control on a ramp with a medium slope may be implemented from the perspective of energy saving and redundancy, to improve a parking capability of the vehicle on the ramp with the medium slope.

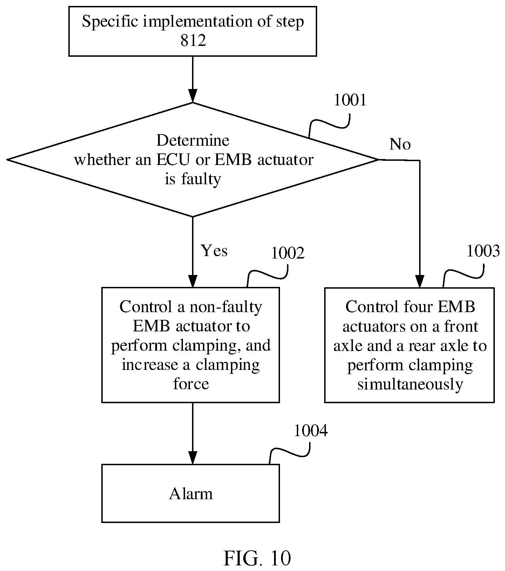

In a possible implementation, in step 812, that the control apparatus controls, according to the third braking strategy and based on running statuses of at least two ECUs and running statuses of the four EMB actuators, a target actuator to perform clamping may be implemented by using an example shown in FIG. 10. As shown in FIG. 10, the following steps are included.

Step 1001: The control apparatus determines whether an ECU or EMB actuator is faulty. If yes, perform step 1002; or if no, perform step 1003.

Step 1002: The control apparatus controls a non-faulty EMB actuator to perform clamping, and increases a clamping force.

Step 1003: The control apparatus controls four EMB actuators on a front axle and a rear axle to perform clamping simultaneously.

Step 1004: The control apparatus sends an alarm signal.

According to the example shown in FIG. 10, optimal EPB braking control on a ramp with a medium slope may be implemented from the perspective of energy saving and redundancy, to improve a parking capability of the vehicle on the ramp with the medium slope.

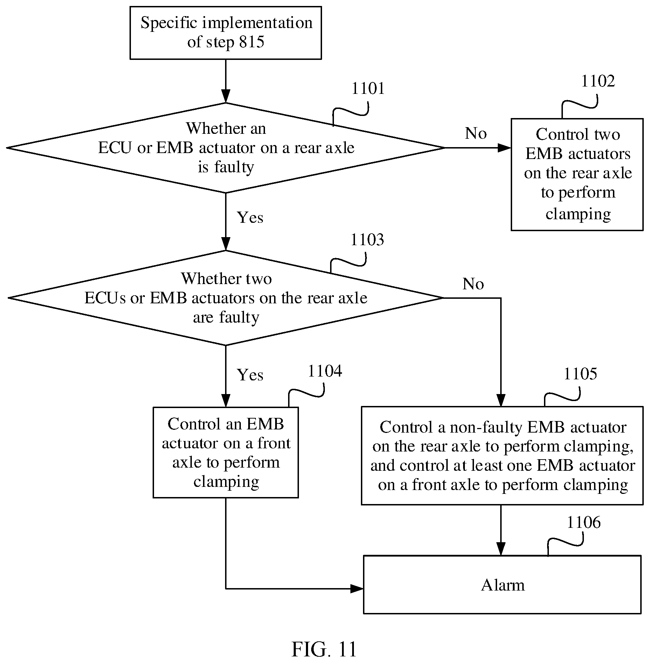

In a possible implementation, in step 815, that the control apparatus controls, according to the fourth braking strategy and based on running statuses of at least two ECUs and running statuses of four EMB actuators, a target actuator to perform clamping may be implemented by using an example shown in FIG. 11. As shown in FIG. 11, the following steps are included.

Step 1101: The control apparatus determines whether an ECU or EMB actuator on a rear axle is faulty. If yes, perform step 1102; or if no, perform step 1105.

Step 1102: The control apparatus controls two EMB actuators on the rear axle to perform clamping.

Step 1103: The control apparatus determines whether two ECUs or EMB actuators on the rear axle are faulty. If yes, perform step 1104; or if no, perform step 1105.

Step 1104: The control apparatus controls an EMB actuator on a front axle to perform clamping.

Step 1105: The control apparatus controls a non-faulty EMB actuator on the rear axle to perform clamping, and controls at least one EMB actuator on a front axle to perform clamping.

Step 1106: The control apparatus sends an alarm signal.

According to the example shown in FIG. 11, optimal EPB braking control on a ramp with a small slope or on a flat ground may be implemented from the perspective of energy saving and redundancy, to improve a parking capability of the vehicle on the ramp with the small slope or on the flat ground.

In embodiments of this application, when the entire braking system works normally, 30% to 40% of a ramp parking capability can be implemented. When one EMB actuator (motor) fails, at least 30% of the ramp parking capability can be implemented.

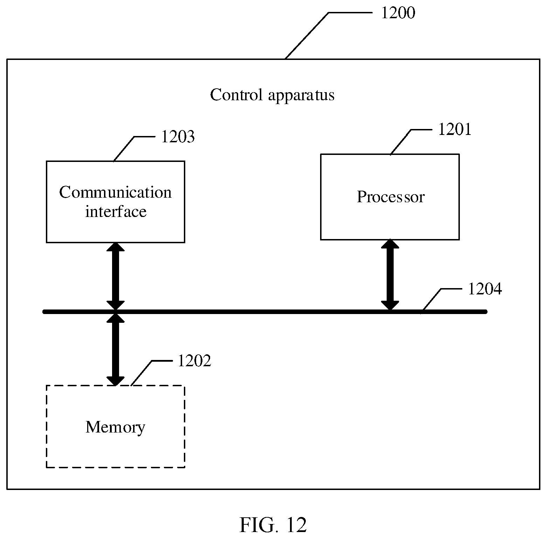

Embodiments of this application further provide a control apparatus. FIG. 12 shows a control apparatus 1200 according to an embodiment of this application. The control apparatus 1200 may be the control apparatus provided in embodiments of this application, and can implement a function of the control apparatus in the method provided in embodiments of this application. The control apparatus 1200 may be a chip system. In this embodiment of this application, the chip system may include a chip, or may include a chip and another discrete component.

In specific implementation, the control apparatus 1200 includes at least one processor 1201, configured to implement or support the control apparatus 1200 in implementing the function of the method provided in embodiments of this application. For details, refer to the detailed descriptions in the method examples. Details are not described herein again.

The control apparatus 1200 may further include at least one memory 1202, configured to store program instructions and/or data. The memory 1202 is coupled to the processor 1201. The coupling in this embodiment of this application may be an indirect coupling or a communication connection between apparatuses, units, or modules in an electrical form, a mechanical form, or another form, and is used for information exchange between the apparatuses, the units, or the modules. The processor 1201 may collaboratively operate with the memory 1202. The processor 1201 may execute the program instructions and/or the data stored in the memory 1202, so that the control apparatus implements the corresponding method. At least one of the at least one memory may be included in the processor. It should be noted that the memory 1202 is not necessary, and therefore, the memory 1202 is illustrated by using dashed lines in FIG. 12.

The control apparatus 1200 may further include a communication interface 1203, configured to communicate with another device by using a transmission medium, so that an apparatus used in the control apparatus 1200 may communicate with the another device. For example, the another device may be a control panel or a terminal. The processor 1201 may send and receive data through the communication interface 1203. The communication interface 1203 may be specifically a transceiver.

In this embodiment of this application, a specific connection medium among the communication interface 1203, the processor 1201, and the memory 1202 is not limited. In this embodiment of this application, in FIG. 12, the memory 1202, the processor 1201, and the communication interface 1203 are connected through a bus 1204. The bus is indicated by using a thick line in FIG. 12. A connection manner between other components is merely an example for description, and is not limited thereto. The bus may be classified into an address bus, a data bus, a control bus, and the like. For ease of representation, only one thick line is used for representation in FIG. 12, but this does not mean that there is only one bus or only one type of bus.

Embodiments of this application further provide a computer program product, including instructions. When the computer program product is run on a computer, the computer is enabled to perform the methods in the foregoing embodiments.

Embodiments of this application further provide a vehicle. The vehicle may include the foregoing braking system. The braking system is configured to receive a control instruction for controlling, and perform braking control based on the received control instruction. The braking system includes a control apparatus, and the control apparatus is configured to perform the control method for the vehicle provided in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A braking system, comprising a first control unit and a second control unit that are located on a first axle, a third control unit located on a second axle, a first electro-mechanical brake EMB actuator, a second EMB actuator, a third EMB actuator, and a fourth EMB actuator, wherein

   the first control unit is configured to control the first EMB actuator;
   the second control unit is configured to control the second EMB actuator;
   the third control unit is configured to control at least one of the third EMB actuator and the fourth EMB actuator; and
   the first EMB actuator, the second EMB actuator, the third EMB actuator, and the fourth EMB actuator are configured to separately or jointly complete a braking operation on a vehicle under control of at least one control unit in the braking system.

2. The braking system according to claim 1, wherein the first axle is a front axle, and the second axle is a rear axle; and when the vehicle is currently in a downhill road condition, and a slope of a location of the vehicle is less than a first threshold,

if none of the first control unit, the second control unit, the first EMB actuator, and the second EMB actuator is faulty, the first control unit controls the first EMB actuator, and the second control unit controls the second EMB actuator, to jointly complete the braking operation on the vehicle; or

if both the first control unit and the second control unit are faulty, and none of the third control unit, the third EMB actuator, and the fourth EMB actuator is faulty, the third control unit controls the third EMB actuator and the fourth EMB actuator to complete the braking operation on the vehicle; or

if both the first EMB actuator and the second EMB actuator are faulty, and none of the third control unit, the third EMB actuator, and the fourth EMB actuator is faulty, the third control unit controls the third EMB actuator and the fourth EMB actuator to complete the braking operation on the vehicle; or

if both the first control unit and the second EMB actuator are faulty, neither of the second control unit and the first EMB actuator is faulty, and none of the third control unit, the third EMB actuator, and the fourth EMB actuator is faulty, the third control unit controls the third EMB actuator and the fourth EMB to complete the braking operation on the vehicle; or

if both the second control unit and the first EMB actuator are faulty, neither of the first control unit and the second EMB actuator is faulty, and none of the third control unit, the third EMB actuator, and the fourth EMB actuator is faulty, the third control unit controls the third EMB actuator and the fourth EMB to complete the braking operation on the vehicle; or

if the first control unit or the first EMB actuator is faulty, neither of the second control unit and the second EMB actuator is faulty, and none of the third control unit, the third EMB actuator, and the fourth EMB actuator is faulty, the second control unit controls the second EMB actuator, and the third control unit controls at least one of the third EMB actuator and the fourth EMB actuator, to complete the braking operation on the vehicle; or

if the second control unit or the second EMB actuator is faulty, neither of the first control unit and the first EMB actuator is faulty, and none of the third control unit, the third EMB actuator, and the fourth EMB actuator is faulty, the first control unit controls the first EMB actuator, and the third control unit controls at least one of the third EMB actuator and the fourth EMB actuator, to complete the braking operation on the vehicle.

3. The braking system according to claim 1, wherein the first axle is a rear axle, and the second axle is a front axle; and when the vehicle is currently in a downhill road condition, and a slope of a location of the vehicle is less than a first threshold,

if none of the third control unit, the third EMB actuator, and the fourth EMB actuator is faulty, the third control unit controls the third EMB actuator and the fourth EMB actuator to complete the braking operation on the vehicle; or

if the third control unit, the third EMB actuator, and the fourth EMB actuator are all faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if neither of the third control unit and the third EMB actuator is faulty, the fourth EMB actuator is faulty, and none of the first control unit, the first EMB actuator, and the second EMB actuator is faulty,

the third control unit controls the third EMB actuator, and the first control unit controls the first EMB actuator, to complete the braking operation on the vehicle; or the third control unit controls the third EMB actuator, and the second control unit controls the second EMB actuator, to complete the braking operation on the vehicle; or the third control unit controls the third EMB actuator, the first control unit controls the first EMB actuator, and the second control unit controls the second EMB actuator, to complete the braking operation on the vehicle; or

if neither of the third control unit and the fourth EMB actuator is faulty, the third EMB actuator is faulty, and none of the first control unit, the first EMB actuator, and the second EMB actuator is faulty,

the third control unit controls the fourth EMB actuator, and the first control unit controls the first EMB actuator, to complete the braking operation on the vehicle; or the third control unit controls the fourth EMB actuator, and the second control unit controls the second EMB actuator, to complete the braking operation on the vehicle; or the third control unit controls the fourth EMB actuator, the first control unit controls the first EMB actuator, and the second control unit controls the second EMB actuator, to complete the braking operation on the vehicle.

4. The braking system according to claim 1, wherein the first axle is a rear axle, and the second axle is a front axle; and when the vehicle is currently in an uphill road condition, and a slope of a location of the vehicle is less than a first threshold,

if none of the first control unit, the second control unit, the first EMB actuator, and the second EMB actuator is faulty, the first control unit controls the first EMB actuator, and the second control unit controls the second EMB actuator, to jointly complete the braking operation on the vehicle; or

if both the first control unit and the second control unit are faulty, and none of the third control unit, the third EMB actuator, and the fourth EMB actuator is faulty, the third control unit controls the third EMB actuator and the fourth EMB actuator to complete the braking operation on the vehicle; or

if both the first EMB actuator and the second EMB actuator are faulty, and none of the third control unit, the third EMB actuator, and the fourth EMB actuator is faulty, the third control unit controls the third EMB actuator and the fourth EMB actuator to complete the braking operation on the vehicle; or

if both the first control unit and the second EMB actuator are faulty, neither of the second control unit and the first EMB actuator is faulty, and none of the third control unit, the third EMB actuator, and the fourth EMB actuator is faulty, the third control unit controls the third EMB actuator and the fourth EMB to complete the braking operation on the vehicle; or

if both the second control unit and the first EMB actuator are faulty, neither of the first control unit and the second EMB actuator is faulty, and none of the third control unit, the third EMB actuator, and the fourth EMB actuator is faulty, the third control unit controls the third EMB actuator and the fourth EMB to complete the braking operation on the vehicle; or

if the first control unit is faulty, neither of the second control unit and the second EMB actuator is faulty, and none of the third control unit, the third EMB actuator, and the fourth EMB actuator is faulty, the second control unit controls the second EMB actuator, and the third control unit controls at least one of the third EMB actuator and the fourth EMB actuator, to complete the braking operation on the vehicle; or

if the second control unit is faulty, neither of the first control unit and the first EMB actuator is faulty, and none of the third control unit, the third EMB actuator, and the fourth EMB actuator is faulty, the first control unit controls the first EMB actuator, and the third control unit controls at least one of the third EMB actuator and the fourth EMB actuator, to complete the braking operation on the vehicle.

5. The braking system according to claim 1, wherein the first axle is a front axle, and the second axle is a rear axle; and when the vehicle is currently in an uphill road condition, and a slope of a location of the vehicle is less than a first threshold,

if none of the third control unit, the third EMB actuator, and the fourth EMB actuator is faulty, the third control unit controls the third EMB actuator and the fourth EMB actuator to complete the braking operation on the vehicle; or

if the third control unit, the third EMB actuator, and the fourth EMB actuator are all faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if neither of the third control unit and the third EMB actuator is faulty, the fourth EMB actuator is faulty, and none of the first control unit, the first EMB actuator, and the second EMB actuator is faulty,

the third control unit controls the third EMB actuator, and the first control unit controls the first EMB actuator, to complete the braking operation on the vehicle; or the third control unit controls the third EMB actuator, and the second control unit controls the second EMB actuator, to complete the braking operation on the vehicle; or the third control unit controls the third EMB actuator, the first control unit controls the first EMB actuator, and the second control unit controls the second EMB actuator, to complete the braking operation on the vehicle; or

if neither of the third control unit and the fourth EMB actuator is faulty, the third EMB actuator is faulty, and none of the first control unit, the first EMB actuator, and the second EMB actuator is faulty,

the third control unit controls the fourth EMB actuator, and the first control unit controls the first EMB actuator, to complete the braking operation on the vehicle; or the third control unit controls the fourth EMB actuator, and the second control unit controls the second EMB actuator, to complete the braking operation on the vehicle; or the third control unit controls the fourth EMB actuator, the first control unit controls the first EMB actuator, and the second control unit controls the second EMB actuator, to complete the braking operation on the vehicle.

6. The braking system according to claim 4, wherein when the vehicle is currently in a downhill road condition or the vehicle is currently in the uphill road condition, and the slope of the location of the vehicle is greater than the first threshold,

if none of the first control unit, the second control unit, the third control unit, the first EMB actuator, the second EMB actuator, the third EMB actuator, and the fourth EMB actuator is faulty, the first control unit controls the first EMB actuator, the second control unit controls the second EMB actuator, and the third control unit controls the third EMB actuator and the fourth EMB actuator, to complete the braking operation on the vehicle; or

if there is a faulty control unit in the first control unit, the second control unit, and the third control unit, or there is a faulty EMB actuator in the first EMB actuator, the second EMB actuator, the third EMB actuator, and the fourth EMB actuator, a non-faulty control unit controls a non-faulty EMB actuator to complete the braking operation on the vehicle, and increases a clamping force of the non-faulty EMB actuator on a braked wheel.

7. The braking system according to claim 1, wherein the first axle is a rear axle, and the second axle is a front axle; and when the vehicle is currently in a flat-ground road condition,

if none of the first control unit, the second control unit, the first EMB actuator, and the second EMB actuator is faulty, the first control unit controls the first EMB actuator, and/or the second control unit controls the second EMB actuator, to complete the braking operation on the vehicle; or

if both the first control unit and the second control unit are faulty, and none of the third control unit, the third EMB actuator, and the fourth EMB actuator is faulty, the third control unit controls at least one of the third EMB actuator and the fourth EMB actuator to complete the braking operation on the vehicle; or

if both the first EMB actuator and the second EMB actuator are faulty, and none of the third control unit, the third EMB actuator, and the fourth EMB actuator is faulty, the third control unit controls at least one of the third EMB actuator and the fourth EMB actuator to complete the braking operation on the vehicle; or

if both the first control unit and the second EMB actuator are faulty, and none of the third control unit, the third EMB actuator, and the fourth EMB actuator is faulty, the third control unit controls at least one of the third EMB actuator and the fourth EMB actuator to complete the braking operation on the vehicle; or

if both the second control unit and the first EMB actuator are faulty, and none of the third control unit, the third EMB actuator, and the fourth EMB actuator is faulty, the third control unit controls at least one of the third EMB actuator and the fourth EMB actuator to complete the braking operation on the vehicle; or

if the first control unit is faulty, and neither of the second control unit and the second EMB actuator is faulty,

the second control unit controls the second EMB actuator to complete the braking operation on the vehicle; or

when the third control unit is not faulty and there is at least one non-faulty EMB actuator in the third EMB actuator and the fourth EMB actuator, the second control unit controls the second EMB actuator, and the third control unit controls the at least one non-faulty EMB actuator in the third EMB actuator and the fourth EMB actuator, to complete the braking operation on the vehicle; or

if the second control unit is faulty, and neither of the first control unit and the first EMB actuator is faulty,

the first control unit controls the first EMB actuator to complete the braking operation on the vehicle; or

when the third control unit is not faulty and there is at least one non-faulty EMB actuator in the third EMB actuator and the fourth EMB actuator, the first control unit controls the first EMB actuator, and the third control unit controls the at least one non-faulty EMB actuator in the third EMB actuator and the fourth EMB actuator, to complete the braking operation on the vehicle.

8. The braking system according to claim 1, wherein the first axle is a front axle, and the second axle is a rear axle; and when the vehicle is currently in a flat-ground road condition,

if none of the third control unit, the third EMB actuator, and the fourth EMB actuator is faulty, the third control unit controls at least one of the third EMB actuator and the fourth EMB actuator to complete the braking operation on the vehicle; or

if the third control unit, the third EMB actuator, and the fourth EMB actuator are all faulty, and none of the first control unit, the second control unit, the first EMB actuator, and the second EMB actuator is faulty, the first control unit controls the first EMB actuator, and/or the second control unit controls the second EMB actuator, to complete the braking operation on the vehicle; or

if neither of the third control unit and the third EMB actuator is faulty, and the fourth EMB actuator is faulty,

the third control unit controls the third EMB actuator to complete the braking operation on the vehicle; or

the third control unit controls the third EMB actuator, and the first control unit controls the first EMB actuator when neither of the first control unit and the first EMB actuator is faulty, and/or the second control unit controls the second EMB actuator when neither of the second control unit and the second EMB actuator is faulty, to complete the braking operation on the vehicle; or

if neither of the third control unit and the fourth EMB actuator is faulty, and the third EMB actuator is faulty,

the third control unit controls the fourth EMB actuator to complete the braking operation on the vehicle; or

the first control unit controls the first EMB actuator when neither of the first control unit and the first EMB actuator is faulty, and/or the second control unit controls the second EMB actuator when neither of the second control unit and the second EMB actuator is faulty, to complete the braking operation on the vehicle.

9. The braking system according to claim 1, wherein the braking system further comprises a fourth control unit located on the second axle;

the third control unit is configured to control the third EMB actuator; and
the fourth control unit is configured to control the fourth EMB actuator.

10. The braking system according to claim 9, wherein the first axle is a front axle, and the second axle is a rear axle; and when the vehicle is currently in a downhill road condition, and a slope of a location of the vehicle is less than a first threshold,

if none of the first control unit, the second control unit, the first EMB actuator, and the second EMB actuator is faulty, the first control unit controls the first EMB actuator, and the second control unit controls the second EMB actuator, to jointly complete the braking operation on the vehicle; or

if both the first control unit and the second control unit are faulty, and none of the third control unit, the fourth control unit, the third EMB actuator, and the fourth EMB actuator is faulty, the third control unit controls the third EMB actuator, and the fourth control unit controls the fourth EMB actuator, to complete the braking operation on the vehicle; or

if both the first EMB actuator and the second EMB actuator are faulty, and none of the third control unit, the fourth control unit, the third EMB actuator, and the fourth EMB actuator is faulty, the third control unit controls the third EMB actuator, and the fourth control unit controls the fourth EMB actuator, to complete the braking operation on the vehicle; or

if both the first control unit and the second EMB actuator are faulty, neither of the second control unit and the first EMB actuator is faulty, and none of the third control unit, the fourth control unit, the third EMB actuator, and the fourth EMB actuator is faulty, the third control unit controls the third EMB actuator, and the fourth control unit controls the fourth EMB, to complete the braking operation on the vehicle; or

if both the second control unit and the first EMB actuator are faulty, neither of the first control unit and the second EMB actuator is faulty, and none of the third control unit, the fourth control unit, the third EMB actuator, and the fourth EMB actuator is faulty, the third control unit controls the third EMB actuator, and the fourth control unit controls the fourth EMB, to complete the braking operation on the vehicle; or

if the first control unit is faulty, neither of the second control unit and the second EMB actuator is faulty, and none of the third control unit, the third EMB actuator, and the fourth EMB actuator is faulty, the second control unit controls the second EMB actuator, the third control unit controls the third EMB actuator, and the fourth control unit controls at least one of the fourth EMB actuator, to complete the braking operation on the vehicle; or

if the second control unit is faulty, neither of the first control unit and the first EMB actuator is faulty, and none of the third control unit, the fourth control unit, the third EMB actuator, and the fourth EMB actuator is faulty, the first control unit controls the first EMB actuator, the third control unit controls the third EMB actuator, and the fourth control unit controls at least one of the fourth EMB actuator, to complete the braking operation on the vehicle.

11. The braking system according to claim 9, wherein the first axle is a front axle, and the second axle is a rear axle; and when the vehicle is currently in an uphill road condition, and a slope of a location of the vehicle is less than a first threshold,

if none of the third control unit, the fourth control unit, the third EMB actuator, and the fourth EMB actuator is faulty, the third control unit controls the third EMB actuator, and the fourth control unit controls the fourth EMB actuator, to jointly complete the braking operation on the vehicle; or

if both the third control unit and the fourth control unit are faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if both the third EMB actuator and the fourth EMB actuator are faulty, and none of the first control unit, the second control unit, the first EMB actuator, and the second EMB actuator is faulty, the first control unit controls the first EMB actuator, and the second control unit controls the second EMB actuator, to complete the braking operation on the vehicle; or

if both the third control unit and the fourth EMB actuator are faulty, neither of the fourth control unit and the third EMB actuator is faulty, and none of the first control unit, the second control unit, the first EMB actuator, and the second EMB actuator is faulty, the first control unit controls the first EMB actuator, and the second control unit controls the second EMB, to complete the braking operation on the vehicle; or

if both the fourth control unit and the third EMB actuator are faulty, neither of the third control unit and the fourth EMB actuator is faulty, and none of the first control unit, the second control unit, the first EMB actuator, and the second EMB actuator is faulty, the first control unit controls the first EMB actuator, and the second control unit controls the second EMB, to complete the braking operation on the vehicle; or

if the third control unit is faulty, neither of the fourth control unit and the fourth EMB actuator is faulty, and none of the first control unit, the first EMB actuator, and the second EMB actuator is faulty, the fourth control unit controls the fourth EMB actuator, the first control unit controls the first EMB actuator, and the second control unit controls at least one of the second EMB actuator, to complete the braking operation on the vehicle; or

if the fourth control unit is faulty, neither of the third control unit and the third EMB actuator is faulty, and none of the first control unit, the second control unit, the first EMB actuator, and the second EMB actuator is faulty, the third control unit controls the third EMB actuator, the first control unit controls the first EMB actuator, and the second control unit controls at least one of the second EMB actuator, to complete the braking operation on the vehicle.

12. The braking system according to claim 9, wherein when the vehicle is currently in a downhill road condition or the vehicle is currently in an uphill road condition, and a slope of a location of the vehicle is greater than a first threshold,

if none of the first control unit, the second control unit, the third control unit, the fourth control unit, the first EMB actuator, the second EMB actuator, the third EMB actuator, and the fourth EMB actuator is faulty, the first control unit controls the first EMB actuator, the second control unit controls the second EMB actuator, the third control unit controls the third EMB actuator, and the fourth control unit controls the fourth EMB actuator, to complete the braking operation on the vehicle; or

if there is a faulty control unit in the first control unit, the second control unit, the third control unit, and the fourth control unit, or there is a faulty EMB actuator in the first EMB actuator, the second EMB actuator, the third EMB actuator, and the fourth EMB actuator, a non-faulty control unit controls a non-faulty EMB actuator to complete the braking operation on the vehicle, and increases a clamping force of the non-faulty EMB actuator on a braked wheel.

13. The braking system according to claim 9, wherein when the vehicle is currently in a flat-ground road condition,

if none of the third control unit, the fourth control unit, the third EMB actuator, and the fourth EMB actuator is faulty, the third control unit controls the third EMB actuator, and/or the fourth control unit controls the fourth EMB actuator, to complete the braking operation on the vehicle; or

if the third control unit or the third EMB actuator is faulty, and neither of the fourth control unit and the fourth EMB actuator is faulty, the fourth control unit controls the fourth EMB actuator to complete the braking operation on the vehicle; or

if the fourth control unit or the fourth EMB actuator is faulty, and neither of the third control unit and the third EMB actuator is faulty, the fourth control unit controls the fourth EMB actuator to complete the braking operation on the vehicle; or

if both the third control unit and the fourth control unit are faulty, and neither of the first control unit and the first EMB actuator is faulty, the first control unit controls the first EMB actuator; or

if both the third control unit and the fourth control unit are faulty, and none of the first control unit, the second control unit, the first EMB actuator, and the second EMB actuator is faulty, the first control unit controls the first EMB actuator, and the second control unit controls the second EMB actuator.

14. The braking system according to any one of claims 2 to 6 and 10 to 13, wherein the slope is a longitudinal slope.

**15.** A control method for a braking system, comprising:

determining a target control unit and a target EMB actuator in the braking system based on a slope of a current location of a vehicle; and controlling, by using the target control unit, the target EMB actuator to complete a braking operation on the vehicle.

**16.** The method according to claim 15, wherein the determining a target control unit and a target EMB actuator in the braking system based on a slope of a current location of a vehicle comprises:

determining a braking strategy of the vehicle based on the slope of the current location of the vehicle; and determining the target control unit and the target EMB actuator in the braking system according to the braking strategy of the vehicle.

**17.** The method according to claim 16, wherein the determining the target control unit and the target EMB actuator in the braking system according to the braking strategy of the vehicle comprises: determining the target control unit and the target EMB actuator in the braking system according to the braking strategy of the vehicle and based on a fault state of each ECU and a fault state of each EMB actuator in the braking system.

**18.** The method according to claim 16 or 17, wherein the braking strategy comprises: when the vehicle is currently in a downhill road condition, preferentially selecting a first EMB actuator and a second EMB actuator that are located on a front axle, to perform the braking operation.

**19.** The method according to claim 18, wherein the braking system comprises a first control unit located on the front axle, a third control unit and/or a fourth control unit located on a rear axle, a first EMB actuator and a second EMB actuator that are located on the front axle, and a third EMB actuator and a fourth EMB actuator that are located on the rear axle; and the determining the target control unit and the target EMB actuator in the braking system according to the braking strategy of the vehicle and based on a fault state of each ECU and a fault state of each EMB actuator in the braking system comprises:

if none of the first control unit, the first EMB actuator, and the second EMB actuator is faulty, determining the first control unit as the target control unit, and determining the first EMB actuator and the second EMB actuator as the target EMB actuator; if the first control unit is faulty, or both the first EMB actuator and the second EMB actuator are faulty, determining the third control unit and/or the fourth control unit as the target control unit, and determining the third EMB actuator and the fourth EMB actuator as the target EMB actuator; or if the first control unit is not faulty, and any front-axle EMB actuator in the first EMB actuator and the second EMB actuator is faulty, determining the first control unit, and the third control unit and/or the fourth control unit as the target control unit, and determining a non-faulty front-axle EMB actuator and at least one of the third EMB actuator and the fourth EMB actuator as the target EMB actuator.

**20.** The method according to claim 18, wherein the braking system comprises a first control unit and a second control unit that are located on the front axle, a third control unit and/or a fourth control unit located on a rear axle, a first EMB actuator and a second EMB actuator that are located on the front axle, and a third EMB actuator and a fourth EMB actuator that are located on the rear axle; and the determining the target control unit and the target EMB actuator in the braking system according to the braking strategy of the vehicle and based on a fault state of each control unit and a fault state of each EMB actuator in the braking system comprises:

if none of the first control unit, the second control unit, the first EMB actuator, and the second EMB actuator is faulty, determining the first control unit and the second control unit as the target control unit, and determining the first EMB actuator and the second EMB actuator as the target EMB actuator; or if both the first control unit and the second control unit are faulty, or both the first EMB actuator and the second EMB actuator are faulty, or the first EMB actuator is not faulty, the first control unit configured to control the first EMB actuator is faulty, the second EMB actuator is faulty, and the second control unit configured to control the second EMB actuator is not faulty, or the first EMB actuator is faulty, the first control unit configured to control the first EMB actuator is not faulty, the second EMB actuator is not faulty, and the second control unit configured to control the second EMB actuator is faulty, determining the third control unit and/or the fourth control unit as the target control unit, and determining the third EMB actuator and the fourth EMB actuator as the target EMB actuator; or if there is one non-faulty control unit in the faulty first control unit and the second control unit, and an EMB actuator controlled by the non-faulty control unit is not faulty, determining the non-faulty control unit in the first control unit and the second control unit as the target control unit, and determining at least one of the third EMB actuator and the fourth EMB actuator and the EMB actuator controlled by the non-faulty control unit as the target EMB actuator.

21. The method according to claim 18, wherein the braking strategy further comprises:
when the slope of the location of the vehicle is greater than a first threshold, further selecting a third EMB actuator and a fourth EMB actuator that are located on a rear axle, to jointly perform the braking operation.

22. The method according to claim 16 or 17, wherein the braking strategy comprises:
when the vehicle is currently in an uphill road condition, preferentially selecting a third EMB actuator and a fourth EMB actuator that are located on a rear axle, to perform the braking operation.

23. The method according to claim 22, wherein the braking system comprises a third control unit located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system comprises:

if none of the third control unit, the third EMB actuator, and the fourth EMB actuator is faulty, determining the third control unit as the target control unit, and determining the third EMB actuator and the fourth EMB actuator as the target EMB actuator; or
if the third control unit is faulty, or both the third EMB actuator and the fourth EMB actuator are faulty, determining the first control unit and/or the second control unit as the target control unit, and determining the first EMB actuator and the second EMB actuator as the target EMB actuator; or
if the third control unit is not faulty, and any rear-axle EMB actuator in the third EMB actuator and the fourth EMB actuator is faulty, determining the third control unit, and the first control unit and/or the second control unit as the target control unit, and determining a non-faulty rear-axle EMB actuator and at least one of the first EMB actuator and the second EMB actuator as the target EMB actuator.

24. The method according to claim 22, wherein the braking system comprises a third control unit and a fourth control unit that are located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system comprises:

if none of the third control unit, the fourth control unit, the third EMB actuator, and the fourth EMB actuator is faulty, determining the third control unit and the fourth control unit as the target control unit, and determining the third EMB actuator and the fourth EMB actuator as the target EMB actuator; or
if both the third control unit and the fourth control unit are faulty, or both the third EMB actuator and the fourth EMB actuator are faulty, or the third EMB actuator is not faulty, the third control unit configured to control the third EMB actuator is faulty, the fourth EMB actuator is faulty, and the fourth control unit configured to control the fourth EMB actuator is not faulty, or the third EMB actuator is faulty, the third control unit configured to control the third EMB actuator is not faulty, the fourth EMB actuator is not faulty, and the fourth control unit configured to control the fourth EMB actuator is faulty, determining the first control unit and/or the second control unit as the target control unit, and determining the first EMB actuator and the second EMB actuator as the target EMB actuator; or
if there is one non-faulty control unit in the faulty third control unit and the fourth control unit, and a rear-axle EMB actuator controlled by the non-faulty control unit is not faulty, determining the non-faulty control unit in the third control unit and the fourth control unit as the target control unit, and determining at least one of the first EMB actuator and the second EMB actuator and the rear-axle EMB actuator controlled by the non-faulty control unit as the target EMB actuator.

25. The method according to claim 22, wherein the braking strategy further comprises:
when the slope of the location of the vehicle is greater than a first threshold, further selecting a first EMB actuator and a second EMB actuator that are located on a front axle, to jointly perform the braking operation.

26. The method according to claim 21 or 25, wherein the braking system comprises at least one front-axle control unit located on the front axle, at least one rear-axle control unit located on the rear axle, the first EMB actuator and the second EMB actuator that are located on the front axle, and the third EMB actuator and the fourth EMB actuator that are located on the rear axle, the at least one front-axle control unit comprises a first control unit and/or a second control unit, and the at least one rear-axle control unit comprises a third control unit and/or a fourth control unit; and
the determining the target control unit and the target EMB actuator in the braking system according to the braking strategy of the vehicle and based on a fault state of each control unit and a fault state of each EMB actuator in the braking system comprises:

if none of the at least one front-axle control unit, the at least one rear-axle control unit, the first EMB actuator, the second EMB actuator, the third EMB actuator, and the fourth EMB actuator is faulty, determining the at least one front-axle control unit and the at least one rear-axle control unit as the target control unit, and determining the first EMB actuator, the second EMB actuator, the third EMB actuator, and the fourth EMB actuator as the target EMB actuator; or
if any control unit in the at least one front-axle control unit and the at least one rear-axle control unit is faulty, and none of the first EMB actuator, the second EMB actuator, the third EMB actuator, and the fourth EMB actuator is faulty, determining a non-faulty control unit in the at least one front-axle control unit and the at least one rear-axle control unit as the target control unit, and determining an EMB actuator controlled by the non-faulty control unit as the target EMB actuator;
or
if neither of the at least one front-axle control unit and the at least one rear-axle control unit is faulty, and at least one EMB actuator in the first EMB actuator, the second EMB actuator, the third EMB actuator, and the fourth EMB actuator is faulty, determining a non-faulty EMB actuator as the target EMB actuator, and determining a control unit configured to control the non-faulty EMB actuator as the target EMB actuator.

27. The method according to claim 16 or 17, wherein the braking strategy comprises:
when the vehicle is currently in a flat-ground road condition, preferentially selecting at least one of a third EMB actuator and a fourth EMB actuator that are located on a rear axle, to perform the braking operation.

28. The method according to claim 27, wherein the braking system comprises a third control unit located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system comprises:

if none of the third control unit, the third EMB actuator, and the fourth EMB actuator is faulty, determining the third control unit as the target control unit, and determining at least one of the third EMB actuator and the fourth EMB actuator as the target EMB actuator;
if the third control unit is faulty, or both the third EMB actuator and the fourth EMB actuator are faulty, determining the first control unit and/or the second control unit as the target control unit, and determining at least one of the first EMB actuator and the second EMB actuator as the target EMB actuator; or
if the third control unit is not faulty, and any rear-axle EMB actuator in the third EMB actuator and the fourth EMB actuator is faulty, determining the third control unit, and the first control unit and/or the second control unit as the target control unit, and determining at least one of the first EMB actuator and the second EMB actuator and a non-faulty EMB actuator in the third EMB actuator and the fourth EMB actuator as the target EMB actuator.

29. The method according to claim 27, wherein the braking system comprises a third control unit and a fourth control unit that are located on the rear axle, a first control unit and/or a second control unit located on a front axle, a first EMB actuator and a second EMB actuator that are located on the front axle, and a third EMB actuator and a fourth EMB actuator that are located on the rear axle; and
the determining the target control unit and the target EMB actuator in the braking system according to the braking strategy of the vehicle and based on a fault state of each control unit and a fault state of each EMB actuator in the braking system comprises:

if none of the third control unit, the fourth control unit, the third EMB actuator, and the fourth EMB actuator is faulty, determining at least one of the third control unit and the fourth control unit as the target control unit, and determining at least one of the third EMB actuator and the fourth EMB actuator as the target EMB actuator; or

if both the third control unit and the fourth control unit are faulty, or both the third EMB actuator and the fourth EMB actuator are faulty, or the third EMB actuator is not faulty, the third control unit configured to control the third EMB actuator is faulty, the fourth EMB actuator is faulty, and the fourth control unit configured to control the fourth EMB actuator is not faulty, or the third EMB actuator is faulty, the third control unit configured to control the third EMB actuator is not faulty, the fourth EMB actuator is not faulty, and the fourth control unit configured to control the fourth EMB actuator is faulty, determining at least one of the first EMB actuator and the second EMB actuator as the target EMB actuator, and determining a control unit configured to control at least one of the first EMB actuator and the second EMB actuator as the target control unit; or

if there is one non-faulty control unit in the faulty third control unit and the fourth control unit, and a rear-axle EMB actuator controlled by the non-faulty control unit is not faulty, determining the non-faulty control unit in the third control unit and the fourth control unit as the target control unit, and determining the rear-axle EMB actuator controlled by the non-faulty control unit as the target EMB actuator; or determining the non-faulty control unit in the third control unit and the fourth control unit, and the first control unit and/or the second control unit as the target control unit, and determining at least one of the first EMB actuator and the second EMB actuator and the rear-axle EMB actuator controlled by the non-faulty control unit as the target EMB actuator.

30. The method according to any one of claims 15 to 29, wherein before the determining a target control unit and a target EMB actuator in the braking system based on a slope of a current location of a vehicle, the method further comprises:
determining that a running status of the vehicle is a static state.

31. The method according to any one of claims 15 to 30, wherein before the determining a target control unit and a target EMB actuator in the braking system based on a slope of a current location of a vehicle, the method further comprises:
receiving a parking signal.

32. The method according to claim 31, wherein the receiving a parking signal comprises:

receiving the parking signal from a parking control button; or
receiving the parking signal from a brake pedal; or

receiving the parking signal from a park gear; or
receiving the parking signal from an automated driving system or an assisted driving system.

33. The method according to any one of claims 15 to 32, wherein the slope is a longitudinal slope.

34. A control apparatus, comprising:
a processor, wherein the processor is coupled to a memory, the memory stores program instructions, and the processor is configured to execute the program instructions to implement the method according to any one of claims 15 to 33.

35. A computer-readable storage medium, wherein the computer-readable storage medium stores instructions, and when the instructions are run on a computer, the computer is enabled to implement the method according to any one of claims 15 to 33.

36. A computer program, comprising instructions, wherein when the instructions are run on a computer, the computer is enabled to implement the method according to any one of claims 15 to 33.

37. A vehicle, comprising wheels and the braking system according to any one of claims 1 to 14.

FIG. 1

FIG. 2

Front left EMB
actuator

Front right EMB
actuator

Left ECU
located on a
front axle

Right ECU
located on the
front axle

ECU located on a rear axle

Rear left EMB
actuator

Rear right EMB
actuator

FIG. 3

Front left EMB
actuator

Front right EMB
actuator

Left ECU
located on a
front axle

Right ECU
located on
the front axle

Left ECU
located on a
rear axle

Right ECU
located on
the rear axle

Rear left EMB
actuator

Rear right EMB
actuator

FIG. 4

Determine a target control unit and a target EMB actuator in a braking system based on a slope of a current location of a vehicle ⟶ 501

Control, by using the target control unit, the target EMB actuator to complete a braking operation on the vehicle ⟶ 502

FIG. 5

Start

A control apparatus determines whether a vehicle is in a static state ⟶ 601

No

Yes

The control apparatus determines a slope of a current location of the vehicle ⟶ 602

The control apparatus determines a braking strategy of the vehicle based on the slope of the current location of the vehicle ⟶ 603

The control apparatus determines a target control unit and a target EMB actuator in a braking system according to the braking strategy of the vehicle and based on a fault state of each ECU and a fault state of each EMB actuator in the braking system ⟶ 604

FIG. 6

Uphill scenario

FIG. 7

FIG. 8A

CONT.
FROM
FIG. 8A

810

Whether
the longitudinal slope is greater
than 30%

No

813

Yes          811

Determine a third braking strategy
in which four EMB actuators on a
front axle and a rear axle are
preferentially selected for
simultaneously clamping

Determine that the longitudinal
slope is less than 3%

812

Control, according to the third
braking strategy and based on
running statuses of at least two
ECUs and running statuses of the
four EMB actuators, a target
actuator to perform clamping

814

Determine a fourth braking
strategy in which an EMB actuator
on a rear axle is preferentially
selected for clamping

815

Control, according to the fourth
braking strategy and based on
running statuses of at least two
ECUs and running statuses of four
EMB actuators, a target actuator to
perform clamping

FIG. 8B

FIG. 9

```
┌─────────────────────────────┐
│ Specific implementation of  │
│           step              │
│            812              │
└─────────────────────────────┘
              │
              ▼
         ╱─────────╲                    1001
        Determine
   whether an ECU or EMB actuator        No
        is faulty
         ╲─────────╱
       Yes    1002                              1003
        │
        ▼
┌─────────────────────┐          ┌─────────────────────┐
│ Control a non-faulty│          │ Control four EMB     │
│ EMB actuator to     │          │ actuators on a front │
│ perform clamping,   │          │ axle and a rear axle │
│ and increase a      │          │ to perform clamping  │
│ clamping force      │          │ simultaneously       │
└─────────────────────┘          └─────────────────────┘
        │         1004
        ▼
┌─────────────────────┐
│       Alarm         │
└─────────────────────┘
```

FIG. 10

Specific implementation
of step 815

1101
Whether an
ECU or EMB actuator on a rear axle
is faulty

No → 1102
Control two
EMB actuators
on the rear axle
to perform
clamping

Yes

1103
Whether two
ECUs or EMB actuators on the rear axle
are faulty

No

Yes 1104
Control an EMB
actuator on a front
axle to perform
clamping

1105
Control a non-faulty EMB actuator
on the rear axle to perform clamping,
and control at least one EMB actuator
on a front axle to perform clamping

1106
Alarm

FIG. 11

FIG. 12

## INTERNATIONAL SEARCH REPORT

| International application No. |
|---|
| **PCT/CN2022/123620** |

| A. | CLASSIFICATION OF SUBJECT MATTER |
|---|---|
| | B60T8/17(2006.01)i; B60T13/74(2006.01)i; B60T17/22(2006.01)i |

According to International Patent Classification (IPC) or to both national classification and IPC

| B. | FIELDS SEARCHED |
|---|---|

Minimum documentation searched (classification system followed by classification symbols)

    IPC:B60T

Documentation searched other than minimum documentation to the extent that such documents are included in the fields searched

Electronic data base consulted during the international search (name of data base and, where practicable, search terms used)

    CNABS, CNTXT, CNKI, ENTXTC: 驻车, 前轴, 后轴, 坡度; VEN, USTXT, EPTXT, GBTXT, WOTXT, ENTXT: parking, front axle, rear axle, grade.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112721884 A (BYD CO., LTD.) 30 April 2021 (2021-04-30) description, paragraphs 27-63, and figures 1-2 | 1-37 |
| X | CN 112061104 A (VOLKSWAGEN AG) 11 December 2020 (2020-12-11) description, paragraphs 72-107, and figures 1-3 | 1-37 |
| X | US 11305747 B1 (ZOOX INC.) 19 April 2022 (2022-04-19) description, column 4, line 41-column 21, line 17, and figures 1-9 | 1-37 |
| A | CN 110254414 A (WANXIANG QIANCHAO CO., LTD. et al.) 20 September 2019 (2019-09-20) entire document | 1-37 |
| A | CN 105774701 A (BEIJING AUTOMOTIVE TECHNOLOGY CENTER) 20 July 2016 (2016-07-20) entire document | 1-37 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 June 2023** | **25 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/123620**

| Patent document cited in search report | | | Publication date (day/month/year) | Patent family member(s) | | | Publication date (day/month/year) |
|---|---|---|---|---|---|---|---|
| CN | 112721884 | A | 30 April 2021 | CN | 112721884 | B | 10 February 2023 |
| CN | 112061104 | A | 11 December 2020 | EP | 3741635 | A1 | 25 November 2020 |
| | | | | EP | 3741635 | B1 | 10 August 2022 |
| | | | | DE | 102019207517 | A1 | 26 November 2020 |
| | | | | US | 2022371571 | A1 | 24 November 2022 |
| | | | | US | 2020369256 | A1 | 26 November 2020 |
| | | | | US | 11414063 | B2 | 16 August 2022 |
| US | 11305747 | B1 | 19 April 2022 | None | | | |
| CN | 110254414 | A | 20 September 2019 | CN | 210554765 | U | 19 May 2020 |
| CN | 105774701 | A | 20 July 2016 | CN | 105774701 | B | 09 March 2018 |

Form PCT/ISA/210 (patent family annex) (July 2022)